(19)

Europäisches Patentamt
European Patent Office
Office européen des brevets

(11) **EP 4 682 609 A1**

(12) **EUROPEAN PATENT APPLICATION**
published in accordance with Art. 153(4) EPC

(43) Date of publication:
**21.01.2026 Bulletin 2026/04**

(21) Application number: **24785095.1**

(22) Date of filing: **27.03.2024**

(51) International Patent Classification (IPC):
*G02B 13/00* (2006.01)    *G02B 9/34* (2006.01)
*H04N 23/55* (2023.01)    *G02B 3/00* (2006.01)

(52) Cooperative Patent Classification (CPC):
**G02B 3/00; G02B 9/34; G02B 13/00; H04N 23/55**

(86) International application number:
**PCT/KR2024/003871**

(87) International publication number:
**WO 2024/210388 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2023  KR 20230044705
19.05.2023  KR 20230065114**

(71) Applicant: **Samsung Electronics Co., Ltd.
Suwon-si, Gyeonggi-do 16677 (KR)**

(72) Inventor: **KIM, Moonjoon
Suwon-si Gyeonggi-do 16677 (KR)**

(74) Representative: **HGF
HGF Limited
4th Floor, 1 City Square
Leeds LS1 2AL (GB)**

(54) **LENS ASSEMBLY AND ELECTRONIC DEVICE COMPRISING SAME**

(57) According to an embodiment of the present disclosure, an electronic device may be provided. The electronic device may comprise: a lens assembly; and an image sensor including an image-forming surface on which an image is formed. The lens assembly may comprise at least four lenses successively arranged along the optical axis in a direction from an object side toward an image side, the at least four lenses comprising a first lens, a second lens having an image-side surface the shape of which is concave on the image side, a third lens and a fourth lens. Various other embodiments are also possible.

FIG. 5

EP 4 682 609 A1

## Description

[Technical Field]

An embodiment of the disclosure relates to a lens assembly and an electronic device comprising the same.

[Background Art]

Optical devices, such as cameras capable of capturing images or videos, have been widely used. While film-based optical devices were predominant in the past, digital cameras or video cameras equipped with solid-state image sensors such as a charge coupled device (CCD) or a complementary metal-oxide semiconductor (CMOS) have become increasingly widespread in recent years. Optical devices employing solid-state image sensors (CCD or CMOS) are gradually replacing film-based optical devices, as they offer advantages in storing, duplicating, and transferring images more easily compared with film-based optical devices.

To obtain high-quality images and/or videos, an optical device may include an optical system composed of a lens assembly having a plurality of lenses and an image sensor with a high pixel count. The lens assembly may have, for example, a low F number (Fno) and small aberration such that high-quality (high-resolution) images and/or videos can be acquired. To achieve a low F number (Fno) and small aberration-in other words, to acquire a bright and high-resolution image-it is necessary to combine multiple lenses. As an image sensor includes more pixels, its pixel count increases, which results in higher-resolution (spatial resolution) images and/or videos. In order to implement a high-pixel-count image sensor within a limited mounting space in an electronic device, a plurality of extremely small pixels, for example, micrometer-sized pixels, may be arranged. Recently, image sensors including tens to hundreds of millions of micrometer-sized pixels have been mounted even in portable electronic devices such as smartphones and tablets. Such high-performance optical devices may serve to attract users to purchase the electronic device.

The above-described information may be provided as a related art in order to help understanding of the disclosure. No claim or determination is raised in connection with whether any of the above description is applicable as a prior art related to the disclosure.

[Detailed Description of the Invention]

[Technical Solution]

According to an embodiment of the disclosure, an electronic device may be provided. The electronic device may include a lens assembly and an image sensor including an imaging plane on which an image is formed. The lens assembly may include at least four lenses sequentially arranged along an optical axis from an object side toward an image side, and may include a first lens, a second lens having an image-side surface with a concave shape toward the image side, a third lens, and a fourth lens. The electronic device (or an entire optical system including the lens assembly and the image sensor) may satisfy the following [Equation 1] to [Equation 4]:

$$[\text{Equation 1}]$$

$$IH \geq 2.9 \text{ mm}$$

$$[\text{Equation 2}]$$

$$f/EPD \leq 2.3$$

[Equation 3]

$$TTL/(IH*2) < 0.74$$

[Equation 4]

$$N2 \geq 1.66$$

wherein, in [Equation 1] and [Equation 3], "IH" is half of a diagonal length of the image sensor, "f" in [Equation 2] is an effective focal length of an entire optical system including the lens assembly and the image sensor, "EPD" is an entrance pupil diameter, "TTL" in [Equation 3] is a distance from an object-side surface of the first lens to the imaging plane, and "N2" in [Equation 4] is a refractive index of the second lens at a wavelength of 587.6 nm.

According to an embodiment of the disclosure, an optical system may be provided. The optical system may include a lens assembly and an image sensor including an imaging plane on which an image is formed. The lens assembly may include at least four lenses sequentially arranged along an optical axis from an object side toward an image side, and may include a first lens, a second lens having an image-side surface with a concave shape toward the image side, a third lens, a fourth lens, and a stop disposed between an object and the first lens. The optical system may have a field of view equal to or less than 90 degrees and may satisfy the following [Equation 1] to [Equation 4]:

[Equation 1]

$$IH \geq 2.9 \text{ mm}$$

[Equation 2]

$$f/EPD \leq 2.3$$

[Equation 3]

$$TTL/(IH*2) < 0.74$$

[Equation 4]

$$N2 \geq 1.66$$

wherein "IH" in [Equation 1] and [Equation 3] is half of a diagonal length of the image sensor, "f" in [Equation 2] is an effective focal length of an entire optical system including the lens assembly and the image sensor, "EPD" is an entrance pupil diameter, "TTL" in [Equation 3] is a distance from an object-side surface S3 of the first lens to the imaging plane, and "N2" in [Equation 4] is a refractive index of the second lens at a wavelength of 587.6 nm.

[Brief Description of the Drawings]

FIG. 1 is a block diagram of an electronic device in a network environment according to an embodiment of the disclosure;

FIG. 2 is a block diagram illustrating a camera module according to an embodiment of the disclosure;

FIG. 3 is a front perspective view of an electronic device according to an embodiment of the disclosure;

FIG. 4 is a rear perspective view of an electronic device according to an embodiment of the disclosure;

FIG. 5 is a configuration diagram illustrating an optical system including a lens assembly and an image sensor according to an embodiment of the disclosure;

FIG. 6A is a graph illustrating spherical aberration of the lens assembly of FIG. 5 according to an embodiment of the disclosure;

FIG. 6B is a graph illustrating astigmatism of the lens assembly of FIG. 5 according to an embodiment of the disclosure;

FIG. 6C is a graph illustrating distortion aberration of the lens assembly of FIG. 5 according to an embodiment of the disclosure;

FIG. 7 is a configuration diagram illustrating an optical system including a lens assembly and an image sensor according to an embodiment of the disclosure;

FIG. 8A is a graph illustrating spherical aberration of the lens assembly of FIG. 7 according to an embodiment of the disclosure;

FIG. 8B is a graph illustrating astigmatism of the lens assembly of FIG. 7 according to an embodiment of the disclosure;

FIG. 8C is a graph illustrating distortion aberration of the lens assembly of FIG. 7 according to an embodiment of the disclosure;

FIG. 9 is a configuration diagram illustrating an optical system including a lens assembly and an image sensor according to an embodiment of the disclosure;

FIG. 10A is a graph illustrating spherical aberration of the lens assembly of FIG. 9 according to an embodiment of the disclosure;

FIG. 10B is a graph illustrating astigmatism of the lens assembly of FIG. 9 according to an embodiment of the disclosure;

FIG. 10C is a graph illustrating distortion aberration of the lens assembly of FIG. 9 according to an embodiment of the disclosure;

FIG. 11 is a configuration diagram illustrating an optical system including a lens assembly and an image sensor according to an embodiment of the disclosure;

FIG. 12A is a graph illustrating spherical aberration of the lens assembly of FIG. 11 according to an embodiment of the disclosure;

FIG. 12B is a graph illustrating astigmatism of the lens assembly of FIG. 11 according to an embodiment of the disclosure;

FIG. 12C is a graph illustrating distortion aberration of the lens assembly of FIG. 11 according to an embodiment of the disclosure;

FIG. 13 is a configuration diagram illustrating an optical system including a lens assembly and an image sensor according to an embodiment of the disclosure;

FIG. 14A is a graph illustrating spherical aberration of the lens assembly of FIG. 13 according to an embodiment of the disclosure;

FIG. 14B is a graph illustrating astigmatism of the lens assembly of FIG. 13 according to an embodiment of the disclosure; and

FIG. 14C is a graph illustrating distortion aberration of the lens assembly of FIG. 13 according to an embodiment of the disclosure.

Throughout the accompanying drawings, similar reference numerals may be assigned to similar parts, components, and/or structures.

[Mode for Carrying out the Invention]

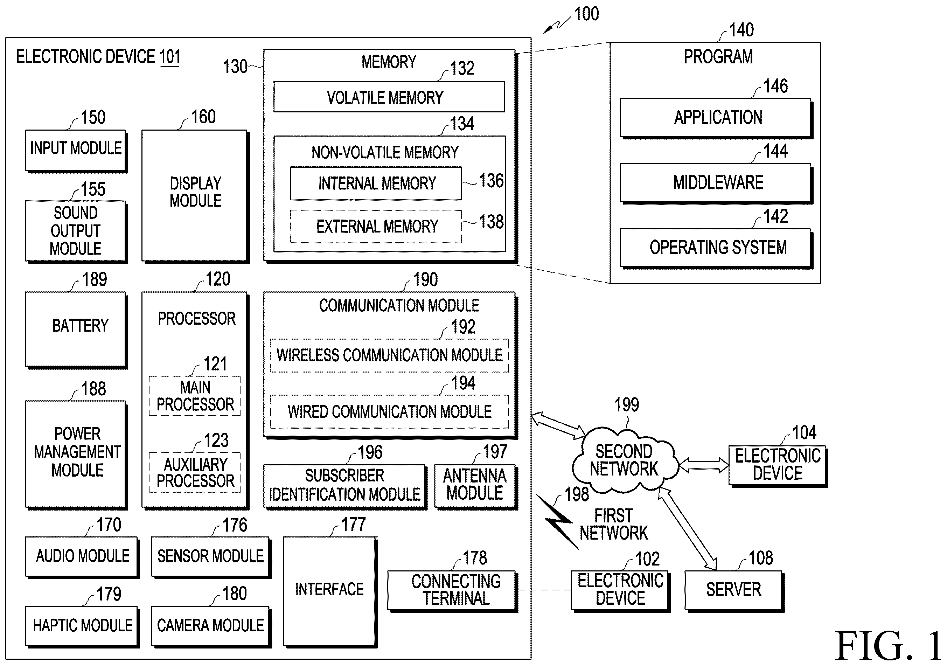

FIG. 1 is a block diagram illustrating an electronic device in a network environment 100 according to an embodiment of the disclosure. Referring to FIG. 1, the electronic device 101 in the network environment 100 may communicate with an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least portion of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as portion of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as portion of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as portion of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a second sensor module configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least portion of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local region network (LAN) or wide region network (WAN))). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other portions (e.g., radio frequency integrated circuit (RFIC)) than the radiator may be further formed as portion of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least portion of the function or the service. The one or more external electronic devices receiving the request may perform the at least portion of the function or the service requested, or an additional function or an additional service related to the request, and transfer an outcome of the performing to the electronic device 101. The electronic device 101 may provide the outcome, with or without further processing of the outcome, as at least portion of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

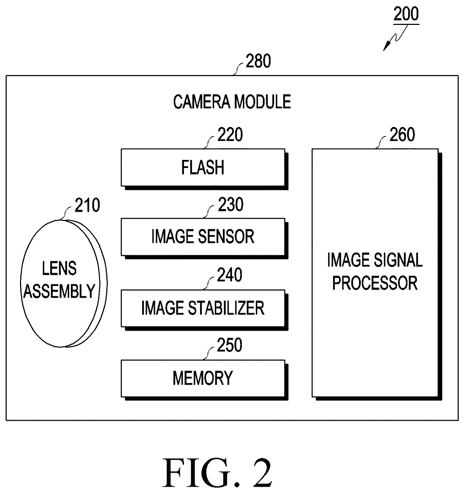

FIG. 2 is a block diagram 200 illustrating a camera module 280 (e.g., the camera module 180 of FIG. 1) according to an embodiment of the disclosure. Referring to FIG. 2, the camera module 280 may include a lens assembly 210, a flash 220, an image sensor 230, an image stabilizer 240, a memory 250 (e.g., a buffer memory), or an image signal processor 260. In an embodiment, the lens assembly 210 may include the image sensor 230. The lens assembly 210 may collect light emitted from a subject to be captured. The lens assembly 210 may include one or more lenses. According to an embodiment, the camera module 280 may include a plurality of lens assemblies 210. In this case, the camera module 280 may form, for example, a dual camera, a 360-degree camera, or a spherical camera. Some of the plurality of lens assemblies 210 may have the same lens characteristics (e.g., field of view, focal length, autofocus, F-number, or optical zoom), or at least one of the lens assemblies may have one or more lens characteristics different from those of the other lens assemblies. The lens assembly 210 may include, for example, a wide-angle lens or a telephoto lens.

The flash 220 may emit light that is used to enhance light emitted or reflected from a subject. According to an embodiment, the flash 220 may include one or more light-emitting diodes (e.g., red-green-blue (RGB) LED, white LED, infrared LED, or ultraviolet LED) or a xenon lamp. The image sensor 230 may obtain an image corresponding to the subject by converting light, which is emitted or reflected from the subject and transmitted through the lens assembly 210, into an electrical signal. According to an embodiment, the image sensor 230 may include one selected image sensor from among various types of image sensors having different characteristics, such as an RGB sensor, a black and white (BW) sensor, an infrared (IR) sensor, or an ultraviolet (UV) sensor; a plurality of image sensors having the same characteristics; or a plurality of image sensors having different characteristics. Each image sensor included in the image sensor 230 may be implemented using, for example, a charge coupled device (CCD) sensor or a complementary metal-oxide semiconductor (CMOS) sensor.

The image stabilizer 240 may move at least one lens included in the lens assembly 210 or the image sensor 230 in a specific direction, or control operational characteristics of the image sensor 230 (e.g., by adjusting read-out timing), in response to movement of the camera module 280 or an electronic device 201 including the camera module. This can compensate for at least part of the negative effects caused by such movement on the captured image. According to an embodiment, the image stabilizer 240 may detect such movement of the camera module 280 or the electronic device (e.g., the electronic device 101 of FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may temporarily store at least part of an image acquired through the image sensor 230 for subsequent image processing. For example, if image acquisition is delayed due to shutter timing, or if multiple images are rapidly captured, the acquired original image (e.g., a Bayer-patterned image or a high-resolution image) may be stored in the memory 250, and a corresponding copy of the image (e.g., a lower-resolution image) may be previewed through the display module 160 of FIG. 1. Then, when a specified condition is satisfied (e.g., a user input or a system command), at least part of the original image stored in the memory 250 may be obtained and processed by, for example, the image signal processor 260. According to an embodiment, the memory 250 may be implemented as part of a memory (e.g., the memory 130 of FIG. 1) or as a separate memory operating independently.

The image signal processor 260 may perform one or more image processing operations on an image acquired through the image sensor 230 or an image stored in the memory 250. The one or more image processing operations may include, for example, depth map generation, three-dimensional modeling, panorama generation, feature point extraction, image synthesis, or image compensation (e.g., noise reduction, resolution adjustment, brightness adjustment, blurring, sharpening, or softening). Additionally or alternatively, the image signal processor 260 may control at least one component included in the camera module 280 (e.g., the image sensor 230), such as by controlling exposure time or read-out timing. An image processed by the image signal processor 260 may be stored again in the memory 250 for further processing, or may be provided to an external component of the camera module 280 (e.g., the memory 130, display module 160, electronic device 102, electronic device 104, or server 108 of FIG. 1). According to an embodiment, the image signal processor 260 may be implemented as part of a processor (e.g., the processor 120 of FIG. 1), or as a separate processor operating independently from the processor 120. In the case where the image signal processor 260 is implemented as a processor separate from the processor 120, at least one image processed by the image signal processor 260 may be displayed through the display module 160 either directly or after undergoing additional image processing by the processor 120.

According to an embodiment, the electronic device (e.g., the electronic device 101 of FIG. 1) may include a plurality of camera modules 280, each having different properties or functions. In this case, for example, at least one of the plurality of camera modules 280 may be a wide-angle camera, and at least another one may be a telephoto camera. Similarly, at least one of the plurality of camera modules 280 may be a front camera, and at least another one may be a rear camera.

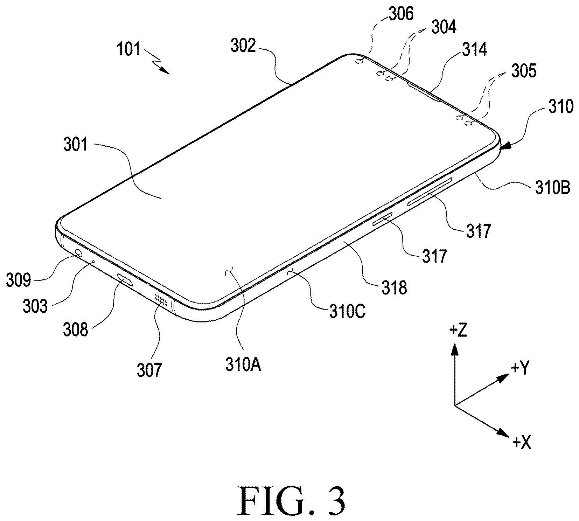

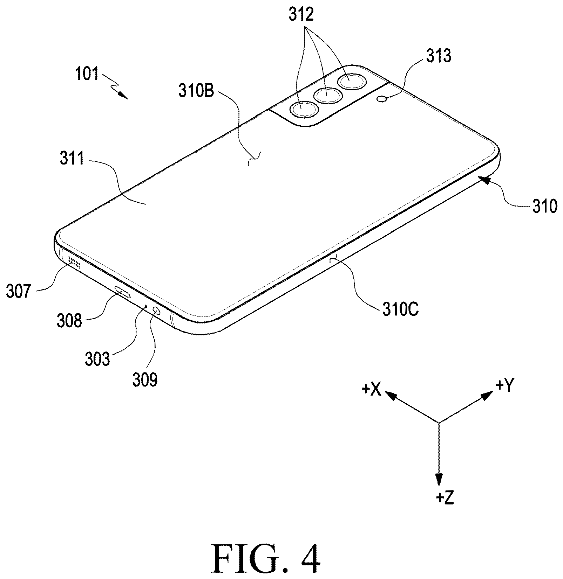

FIG. 3 is a front perspective view of an electronic device according to an embodiment of the disclosure. FIG. 4 is a rear perspective view of an electronic device according to an embodiment of the disclosure.

The configuration of the electronic device 101 shown in FIGS. 3 and 4 may be the same as all or part of the configuration of the electronic device 101 shown in FIG. 1.

Referring to FIGS. 3 and 4, an electronic device 101 according to an embodiment of the disclosure may include a housing 310 that includes a first surface (or front surface) 310A, a second surface (or rear surface) 310B, and a side surface 310C that surrounds the space between the first surface 310A and the second surface 310B. In an embodiment (not shown), the housing 310 may refer to a structure that forms part of the first surface 310A of FIG. 3, the second surface 310B of FIG. 4, and the side surface(s) 310C. According to an embodiment, the first surface 310A may be formed, at least in part, by a substantially transparent front plate 302 (e.g., a glass plate including various coating layers or a polymer plate). The second surface 310B may be formed by a substantially opaque rear plate 311. The rear plate 311 may be formed of, for example, coated or tinted glass, ceramic, polymer, metal (e.g., aluminum, stainless steel (STS), or magnesium), or a combination of at least two of these materials. The side surface 310C may be joined to the front plate 302 and the rear plate 311, and may be formed by a side structure (or "side bezel structure") 318 that includes metal and/or polymer. In an embodiment, the rear plate 311 and the side structure 318 may be integrally formed and may include the same material (e.g., a metal material such as glass or aluminum, or ceramic).

According to an embodiment (not shown), the front plate 302 may include one or more seamlessly extended regions that curve toward the rear plate 311 at at least a portion of its edge. In an embodiment, only one of the extended curved regions-where the front plate 302 (or the rear plate 311) curves toward the rear plate 311 (or the front plate 302)-may be included at one edge of the first surface 310A. According to an embodiment, the front plate 302 or the rear plate 311 may have a substantially flat shape, in which case no curved extension region may be included. When a curved extension region is included, the thickness of the electronic device 101 in the region where the curved extension is present may be smaller than the thickness in other regions.

According to an embodiment, the electronic device 101 may include at least one of a display 301, an audio module (not shown) including at least one sound hole 303, 207, or 214 (e.g., the audio module 170 of FIG. 1), a sensor module 304 (e.g., the sensor module 176 of FIG. 1), a camera module 305, 212, or 213 (e.g., the camera module 180 of FIG. 1 and/or the camera module 280 of FIG. 2), a key input device 317 (e.g., the input module 150 of FIG. 1), a light-emitting element 306, a connector hole 308 or 209 (e.g., the connection terminal 178 of FIG. 1), and a non-conductive cover 361. According to an embodiment, the electronic device 101 may omit at least one of the components (e.g., the connector hole 309) or additionally include other components.

According to an embodiment, the display 301 may be visually exposed through a substantial portion of the front plate 302. According to an embodiment, at least a portion of the display 301 may be visually exposed through the front plate 302 that forms the first surface 310A or through a portion of the side surface 310C. According to an embodiment, the corners of the display 301 may be formed to generally match the adjacent outer shape of the front plate 302. In an embodiment (not shown), in order to expand the visually exposed area of the display 301, the gap between the outer edge of the display 301 and the outer edge of the front plate 302 may be formed to be substantially uniform. According to an embodiment, the surface of the housing 310 (or the front plate 302) may include a screen display region formed as the display 301 becomes visually exposed, and as an example, the screen display region may include the front surface 310A.

In an embodiment (not shown), a recess or an opening may be formed in a portion (e.g., the front surface 310A) of the screen display region of the display 301, and at least one of a sound hole 314, a sensor module 304, a camera module 305, and a light-emitting element 306 may be included, aligned with the recess or the opening. In an embodiment (not shown), at least one of a sound hole 314, a sensor module 304, a camera module 305, a fingerprint sensor (not shown), and a light-emitting element (not shown) may be disposed on a rear side of the screen display region of the display 301. In an embodiment (not shown), the display 301 may be coupled with or disposed adjacent to a touch sensing circuit, a pressure sensor capable of measuring the intensity (pressure) of a touch, and/or a digitizer configured to detect a stylus pen based on a magnetic field. According to an embodiment, at least a portion of the sensor module 304 and/or at least a portion of the key input device 317 may be disposed on the side surface 310C.

According to an embodiment, the audio module (not shown) may include a microphone hole 303 and sound holes 307 and 214. A microphone may be disposed inside the microphone hole 303 to acquire external sound, and in an embodiment, a plurality of microphones may be arranged to detect the direction of sound. According to an embodiment, the sound holes 307 and 214 may include an external sound hole 307 and a receiver hole 314 for voice calls. In an embodiment, the sound holes 307 and 214 and the microphone hole 303 may be implemented as a single hole, or a speaker may be included in the audio module without sound holes 307 and 214 (e.g., a piezoelectric speaker).

According to an embodiment, the sensor module (not shown) may generate an electrical signal or data value corresponding to an internal operating state of the electronic device 101 or an external environmental state. The sensor module (not shown) may include, for example, a first sensor module (e.g., a proximity sensor) and/or a second sensor module (e.g., a fingerprint sensor) disposed on the front surface 310A of the housing 310, and/or a third sensor module (e.g., a heart rate monitoring (HRM) sensor) and/or a fourth sensor module (e.g., a fingerprint sensor) disposed on the rear surface 310B of the housing 310. In an embodiment (not shown), the fingerprint sensor may be disposed not only on the front surface 310A (e.g., the display 301) of the housing 310 but also on the rear surface 310B. The electronic device 101 may further include at least one additional sensor module (not shown), such as a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an ambient light sensor. The sensor module is not limited to the above-described configuration and may be variously modified, for example, by including only some of the sensor modules or by adding new sensor modules, depending on the structure of the electronic device 101.

According to an embodiment, the camera module 305, 212, or 213 may include a first camera device 305 disposed on the first surface 310A of the electronic device 101, a second camera device 312 disposed on the second surface 310B, and/or a flash 313. The camera devices 305 and 212 may include one or more lenses, an image sensor, and/or an image signal processor. The flash 313 may include, for example, a light-emitting diode or a xenon lamp. In an embodiment, two or more lenses (e.g., an infrared camera, a wide-angle lens, and a telephoto lens) and image sensors may be disposed on one surface of the electronic device 101. In an embodiment, the flash 313 may emit infrared light. For example, infrared light emitted from the flash 313 and reflected by a subject may be received through a sensor module (not shown) disposed on the second surface 310B of the housing 310. The electronic device 101 or a processor of the electronic device 101 may detect depth information of the subject based on the point in time when the infrared light is received by the sensor module. The camera module 305, 312, or 313 is not limited to the above-described configuration and may be variously modified, for example, by including only some of the camera modules or by adding new camera modules depending on the structure of the electronic device 101.

According to an embodiment, the electronic device 101 may include a plurality of camera modules (e.g., a dual camera or a triple camera), each having different properties (e.g., field of view) or functions. For example, multiple camera modules 305 and 312 including lenses with different fields of view may be provided, and the electronic device 101 may control the field of view of the camera modules 305 and 312 operating on the electronic device 101 to be changed based on a user's selection. For instance, at least one of the plurality of camera modules 305 and 312 may be a wide-angle camera, and at least another one may be a telephoto camera. Similarly, at least one of the plurality of camera modules 305 and 312 may be a front camera, and at least another one may be a rear camera. Additionally, the plurality of camera modules 305 and 312 may include at least one of a wide-angle camera, a telephoto camera, or an infrared (IR) camera (e.g., a time-of-flight (TOF) camera or a structured light camera). According to an embodiment, the IR camera may operate as at least a part of a sensor module. For example, a TOF camera may operate as at least a part of a sensor module (not shown) for detecting a distance to a subject.

According to an embodiment, the key input device 317 may be disposed on the side surface 310C of the housing 310. In an embodiment, the electronic device 101 may include only some or none of the above-described key input device(s) 317, and a key input device 317 that is not included may be implemented in another form, such as a soft key, on the display 301. In an embodiment, the key input device may include a sensor module (not shown) disposed on the second surface 310B of the housing 310.

According to an embodiment, the light-emitting element 306 may be disposed, for example, on the first surface 310A of the housing 310. The light-emitting element 306 may provide state information of the electronic device 101 in the form of light. In an embodiment, the light-emitting element 306 may provide a light source that operates in conjunction with the operation of the first camera module 305 disposed on the first surface 310A. The light-emitting element 306 may include, for example, an LED, an IR LED, and a xenon lamp.

According to an embodiment, the connector holes 308 and 209 may include a first connector hole 308 configured to receive a connector (e.g., a USB connector) for transmitting and/or receiving power and/or data with an external electronic device, and/or a second connector hole 309 configured to receive a connector for transmitting and receiving audio signals with an external electronic device (e.g., an earphone jack).

According to an embodiment, some of the camera modules 305 and 312, such as the camera module 305, and/or some of the sensor modules (not shown) may be disposed to be exposed to the outside through at least a portion of the display 301. For example, the camera module 305 may include a punch-hole camera disposed within a hole or a recess formed on the rear side of the display 301. According to an embodiment, the camera module 312 may be disposed inside the housing 310 such that the lens is exposed through the rear surface 310B of the electronic device 101. For example, the camera module 312 may be disposed on a printed circuit board (not shown).

According to an embodiment, the camera module 305 and/or the sensor module may be disposed within an internal space of the electronic device 101 such that they are in contact with the external environment through a transparent region of the display 301 extending to the front plate 302. Additionally, some sensor modules 304 may be disposed within the internal space of the electronic device so as to perform their functions without being visually exposed through the front plate 302.

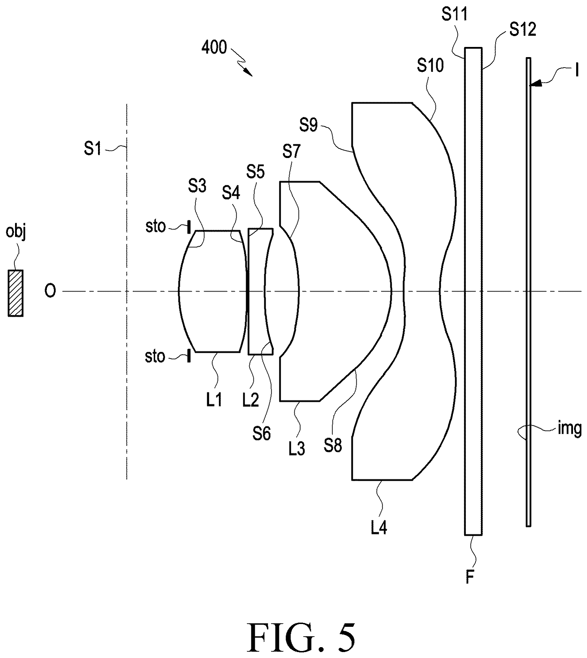

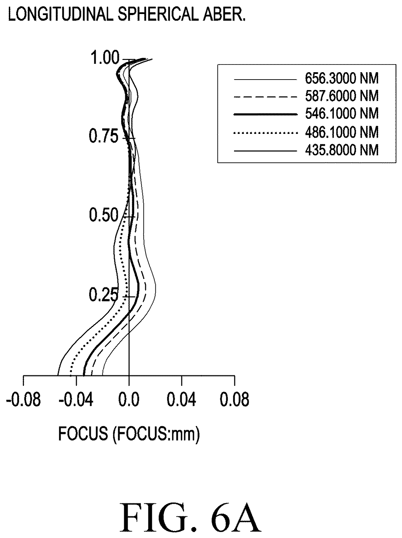

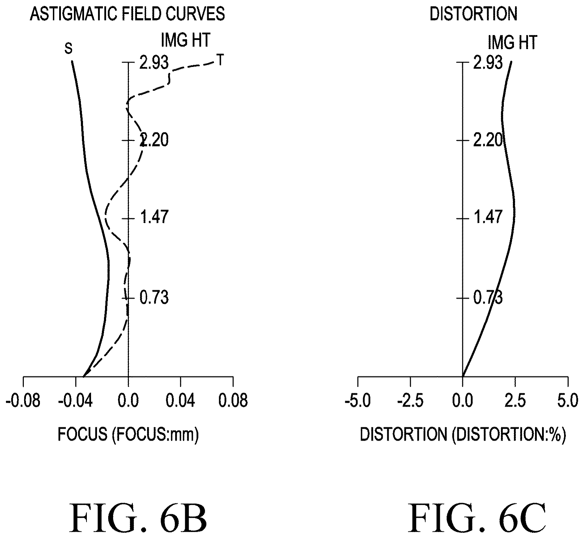

FIG. 5 is a configuration diagram illustrating an optical system including a lens assembly and an image sensor according to an embodiment of the disclosure. FIG. 6A is a graph illustrating spherical aberration of the lens assembly of FIG. 5 according to an embodiment of the disclosure. FIG. 6B is a graph illustrating astigmatism of the lens assembly of FIG. 5 according to an embodiment of the disclosure. FIG. 6C is a graph illustrating distortion aberration of the lens assembly of FIG. 5 according to an embodiment of the disclosure.

FIG. 6A is a graph illustrating spherical aberration of the lens assembly 400 according to an embodiment of the disclosure, in which the horizontal axis represents coefficients of longitudinal spherical aberration, the vertical axis represents normalized distances from the optical axis O, and variations in longitudinal spherical aberration are illustrated according to the wavelength of light. The longitudinal spherical aberration is illustrated for light having wavelengths of, for example, 656.3000 nm (nanometer), 587.6000 nm, 546.1000 nm, 486.1000 nm, and 435.8000 nm, respectively. FIG. 6B is a graph illustrating astigmatic field curves of the lens assembly 400 for light having a wavelength of 546.1000 nm according to an embodiment of the disclosure. In the graph, "S" represents a sagittal plane, and "T" represents a tangential plane (or meridional plane). FIG. 6C is a graph illustrating distortion of the lens assembly 400 for light having a wavelength of 546.1000 nm according to an embodiment of the disclosure.

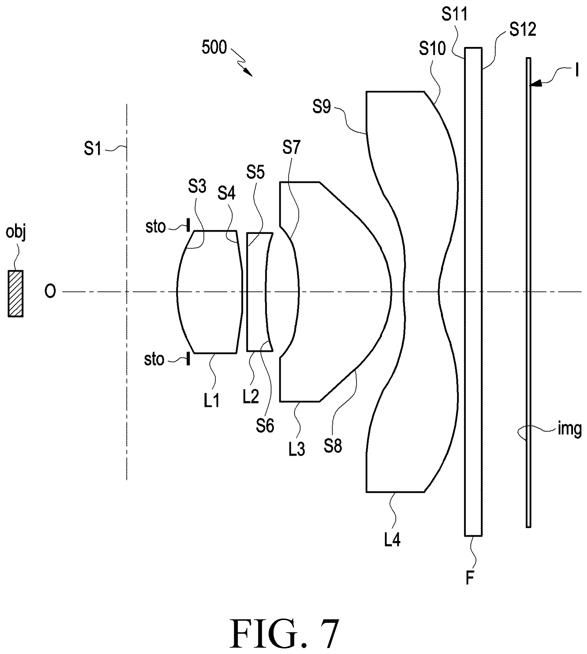

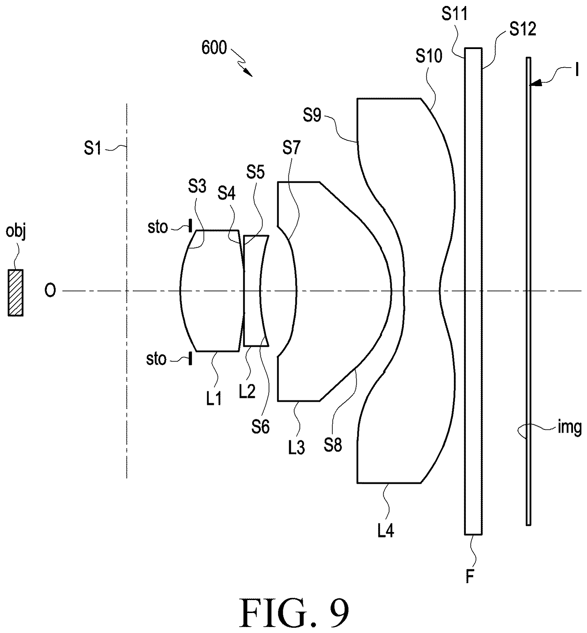

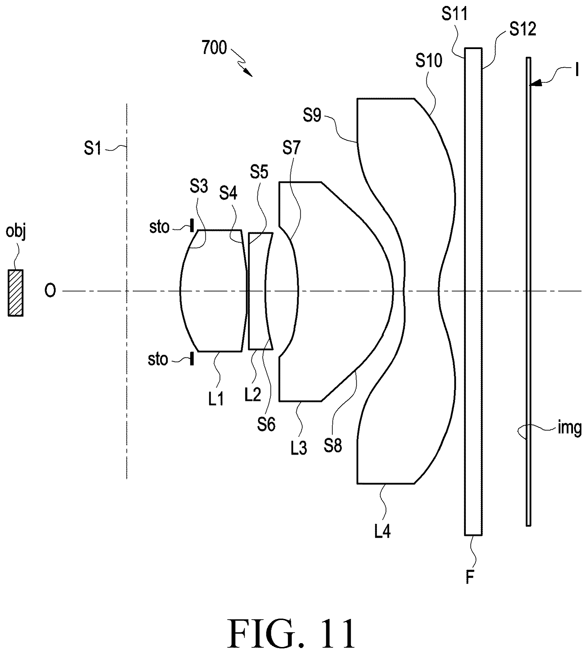

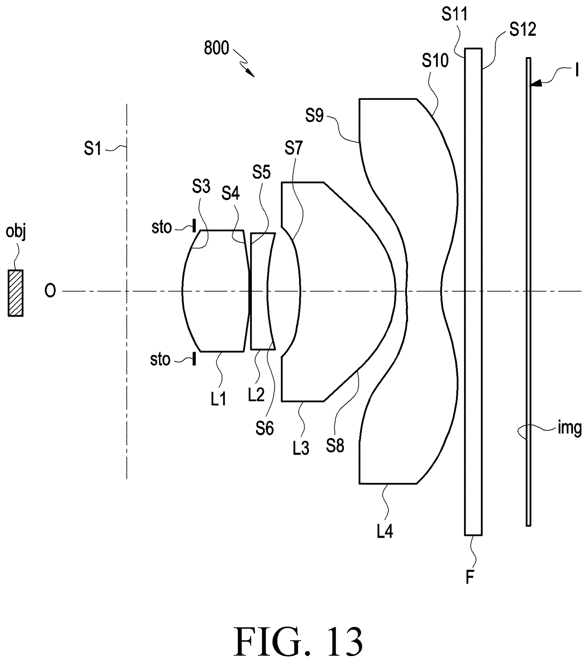

Referring to FIGS. 5 to 6C, in an embodiment of the disclosure, an electronic device (e.g., the electronic device 101 of FIGS. 1, 3, and 4) may include an optical system including a lens assembly 400 (e.g., the lens assembly 210 of FIG. 2) and an image sensor I (e.g., the image sensor 230 of FIG. 2). The optical system including the lens assembly according to an embodiment of the disclosure (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13) may constitute at least a portion of a camera module (e.g., the camera module 180 of FIG. 1, the camera module 280 of FIG. 2, the camera module 305 of FIG. 3, and/or the camera module 312 of FIG. 4) of the electronic device 101. According to an embodiment, the lens assembly 400, 500, 600, 700, and 800 may include a plurality (e.g., at least four) of lenses L1, L2, L3, and L4 and a stop sto. According to an embodiment, the lenses L1, L2, L3, and L4, the stop sto, and/or the image sensor I may be substantially aligned along the optical axis O. In the disclosure, the expression "aligned along the optical axis O" may be understood to mean that either a region through which light passes from the stop sto and/or the lenses L1, L2, L3, and L4 to the imaging plane img of the image sensor I, or the imaging plane img itself of the image sensor I, is aligned with the optical axis O.

According to an embodiment, the lenses L1, L2, L3, and L4 may include a first lens L1, a second lens L2, a third lens L3, and a fourth lens L4 that are sequentially arranged along the optical axis O in a direction from an object obj toward the image sensor I. According to an embodiment, the lenses L1, L2, L3, and L4 may each include an object-side surface facing the object obj and an image-side surface facing the image sensor I. For example, the first lens L1 may include an object-side surface S3 and an image-side surface S4. The second lens L2 may include an object-side surface S5 and an image-side surface S6. The third lens L3 may include an object-side surface S7 and an image-side surface S8. The fourth lens L4 may include an object-side surface S9 and an image-side surface S10. According to an embodiment, at least one of the lenses L1, L2, L3, and L4 may be configured to reciprocate along the optical axis O, and the electronic device (e.g., the electronic device 101 of FIG. 1 and/or FIGS. 3 and 4) or a processor (e.g., the processor 120 of FIG. 1) may perform focusing or focal length adjustment by causing at least one of the lenses L1, L2, L3, and L4 to reciprocate. According to an embodiment, the lens assembly (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13) may be disposed in at least one of the camera module 305 of FIG. 3 and/or the camera module 312 of FIG 4. For example, S1 shown in the drawings (e.g., S1 of FIGS. 5, 7, 9, 11, and 13) may represent a point located between the first lens L1 and the object obj. The "S1" shown in the drawings (e.g., S1 of FIGS. 5, 7, 9, 11, and 13) may represent a position considered in the design of the lens assemblies 400, 500, 600, 700, and 800, rather than an actual lens surface, and may indicate, for example, a reference position of a structure in which a protective window is disposed, or a position of a structure (or a lens barrel or lens housing) for fixing one of the lenses L1, L2, L3, and L4 (e.g., the first lens L1).

According to an embodiment, the stop sto may be disposed between an object obj and the first lens L1, and may be implemented, for example, on a surface (e.g., the object-side surface S3) of the first lens L1. For example, the arrangement of the stop sto in front of the object-side surface S3 of the first lens L1 may be advantageous for reducing the field-of-view angle of the optical system and minimizing its aperture.

According to an embodiment, the stop sto may be disposed on the object obj side with respect to the lenses L1, L2, L3, and L4, and may define a region into which light is substantially incident on the lens assembly (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13). According to an embodiment, the stop sto may be disposed between an object obj and the first lens L1, and may be implemented, for example, on a surface (e.g., the object-side surface S3) of the first lens L1. For example, the lenses L1, L2, L3, and L4 may be disposed substantially between the stop sto and the image sensor I, and may focus the light that is incident through the stop sto onto the image sensor I. For example, the arrangement of the stop sto in front of the object-side surface S3 of the first lens L1 may be advantageous for reducing the field-of-view angle of the optical system and minimizing its aperture. For example, by disposing the stop sto in front of the object-side surface S3 of the first lens L1, the lens assemblies 400, 500, 600, 700, and 800 may be reduced in aperture while still providing favorable wide-angle performance. According to an embodiment, the image sensor I may include an imaging plane img that receives at least a portion of light focused through the stop sto and/or the lenses L1, L2, L3, and L4. According to an embodiment, the image sensor I may be understood as a component separate from the lens assemblies 400, 500, 600, 700, and 800.

According to an embodiment, the lens assembly (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13) may further include an infrared cut filter F. According to an embodiment, the infrared cut filter F may include an object-side surface S11 facing the object obj and an image-side surface S12 facing the image sensor I, respectively. For example, the infrared cut filter F may block a wavelength band of light (e.g., infrared light) that is not visible to the human eye but is detectable by film or image sensor I. In an embodiment, depending on the application of the lens assemblies 400, 500, 600, 700, and 800 or the electronic device (e.g., the electronic device 101 of FIG. 1 and/or FIGS. 3 and 4), the infrared cut filter F may be replaced with a band-pass filter that transmits infrared light and blocks visible light. For example, in a lens assembly (e.g., 400, 500, 600, 700, or 800) or in the electronic device 101 intended for detecting infrared light, the infrared cut filter F may be replaced with a band-pass filter that transmits infrared light.

According to an embodiment, the infrared cut filter F and/or the image sensor I may be described as a configuration separate from the lens assembly (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13). For example, the infrared cut filter F and/or the image sensor I may be mounted in an electronic device (e.g., the electronic device 101 of FIG. 1 and/or FIGS. 3 and 4) or an optical device (e.g., the camera module 180 of FIG. 1, the camera module 280 of FIG. 2, and/or the camera modules 305 and 312 of FIGS. 3 and 4), and a plurality of lenses L1, L2, L3, and L4 constituting the lens assemblies 400, 500, 600, 700, and 800 may be mounted to the electronic device or the optical device in a state aligned with the infrared cut filter F and/or the image sensor I along the optical axis O.

According to an embodiment, the electronic device (e.g., the electronic device 101 of FIG. 1 and/or FIGS. 3 and 4) may include a front camera (e.g., the camera module 280 of FIG. 2 and/or the first camera device 305 of FIG. 3). For example, the front camera 305 may be arranged to receive light through a camera exposure region. Here, the camera exposure region may be at least a portion of a screen area of a display (e.g., the display module 160 of FIG. 1 or the display 301 of FIG. 3), such as an under display camera (UDC) region, a peripheral region of the screen area, a notch region extending or protruding inward from the screen area, and/or a hole (e.g., punch-hole or perforated hole) formed through a part of the screen area. For example, a lens barrel (not shown) may be provided inside the display (e.g., the display module 160 of FIG. 1 or the display 301 of FIG. 3) of the electronic device. For example, the lens barrel (not shown) may receive light through the camera exposure region formed in the display.

In the following detailed description, the shape of an object-side surface, which is a surface of the lenses L1, L2, L3, and L4 facing the object obj, and/or the shape of an image-side surface, which is a surface facing the image sensor I or the imaging plane img, may be described using terms such as "concave" or "convex." Such descriptions regarding the shape of the lens surfaces may pertain to a point intersecting the optical axis O or a shape in a paraxial region intersecting the optical axis O. The expression "the object-side surface is concave" may refer to a shape in which the center of curvature of the object-side surface is located on the object obj side. The expression "the object-side surface is convex" may refer to a shape in which the center of curvature of the object-side surface is located on the image sensor I side. Accordingly, even when one surface of a lens (the portion along the optical axis) is described as having a convex shape, an edge portion of the lens (the portion spaced a predetermined distance from the optical axis) may be concave. Similarly, even when one surface of a lens (the portion along the optical axis) is described as having a concave shape, an edge portion of the lens (the portion spaced a predetermined distance from the optical axis) may be convex. In the following detailed description and claims, the term "inflection point" may refer to a point at which the radius of curvature changes in a portion that does not intersect the optical axis O.

In the following detailed description, unless otherwise specified, the radii of the lenses L1, L2, L3, and L4, the effective focal length f, the total track length (TTL), the surface distance (SD), the thickness, or the image height (IH) of the image sensor I may all be expressed in millimeters (mm). In addition, the radii of the lenses L1, L2, L3, and L4, the effective focal length, the TTL, the SD, the thickness, or the image height IH of the image sensor I may be distances measured with respect to the optical axis O.

According to an embodiment, the lens assembly (e.g., the lens assembly 400 of FIG. 5, the lens assembly 500 of FIG. 7, the lens assembly 600 of FIG. 9, the lens assembly 700 of FIG. 11, and/or the lens assembly 800 of FIG. 13) may be a wide lens that provides a field of view (FOV) of approximately 90 degrees or less, and may implement, for example, a field of view of approximately 80 degrees. According to an embodiment, the lenses L1, L2, L3, and L4 may be formed to include a polymer material.

According to an embodiment, the first lens L1 may be the lens closest to the object obj and may have a positive refractive power. According to an embodiment, the stop sto may be disposed between the first lens L1 and the object obj, and the first lens L1 may be the first lens disposed after the stop sto. According to an embodiment, an object-side surface S3 of the first lens L1 may have a convex shape toward the object obj. For example, the convex shape of the object-side surface S3 toward the object obj may suppress an increase in spherical aberration resulting from a large aperture of the optical system (e.g., the lenses L1, L2, L3, and L4). According to an embodiment, the refractive index of the first lens L1 may be relatively lower than that of the second lens L2, and may be, for example, approximately 1.6 or less.

According to an embodiment, the second lens L2 may be the second lens disposed after the stop sto and may have a negative refractive power. According to an embodiment, an image-side surface S6 of the second lens L2 may have a concave shape toward the image side. For example, the concave shape of the image-side surface S6 toward the image side may be advantageous for improving aberration of the optical system and reducing the total length. According to an embodiment, the refractive index of the second lens L2 may be relatively greater than that of the first lens L1, the third lens L3, and/or the fourth lens L4, and may be, for example, approximately 1.66 or greater.

According to an embodiment, the third lens L3 may be the third lens disposed after the stop sto and may have a positive refractive power. According to an embodiment, the third lens L3 may have a meniscus shape that is convex toward the image side. In this case, both an object-side surface S7 and an image-side surface S8 of the third lens L3 may have a convex shape toward the image side. For example, the meniscus shape of the third lens L3 that is convex toward the image side may be advantageous for improving or correcting aberration in a peripheral region of the third lens L3. According to an embodiment, the refractive index of the third lens L3 may be relatively lower than that of the second lens L2, and may be, for example, approximately 1.6 or less.

According to an embodiment, the fourth lens L4 may be the fourth lens disposed after the stop sto and may have a negative refractive power. The fourth lens L4 may be the lens disposed closest to the image sensor I. At least one of an object-side surface S9 or an image-side surface S10 of the fourth lens L4 may be formed as an aspheric surface. According to an embodiment, both the object-side surface S9 and the image-side surface S10 of the fourth lens L4 may be formed as aspheric surfaces. In an embodiment, a paraxial region of the fourth lens L4 near the optical axis O may have a meniscus shape that is convex toward the object obj. According to an embodiment, a peripheral region adjacent to the paraxial region of the fourth lens L4 may include at least one inflection point and may have a shape inclined toward the object obj. Such a shape may be advantageous in reducing the effective diameter of the fourth lens L4 and shortening the total length of the entire optical system. According to an embodiment, the refractive index of the fourth lens L4 may be lower than that of the second lens L2, and may be, for example, approximately 1.6 or less.

According to an embodiment, at least one surface (e.g., an object-side surface and/or an image-side surface) of at least some of the plurality of lenses L1, L2, L3, and L4 may be formed as an aspheric surface. Spherical aberration that may occur in the lenses may be suppressed by forming at least one surface of at least some of the plurality of lenses L1, L2, L3, and L4 as an aspheric surface. According to an embodiment, by forming the lens surface as an aspheric surface, it is possible to prevent coma from occurring in a peripheral portion of the image sensor I, facilitate control of astigmatism and reduce the occurrence of field curvature from the center to the periphery of the imaging plane img of the image sensor I.

According to an embodiment, an optical system (or electronic device) including the lens assembly 400 may satisfy the following [Equation 1]:

[Equation 1]

$$IH \geq 2.9 \text{ mm}$$

In [Equation 1], "IH" may represent half of the diagonal length of the image sensor I and may be the maximum value among the height or distance measured from the optical axis O to the edge of the imaging plane img.

According to an embodiment, the value calculated in [Equation 1] may represent the size of the image sensor I. The embodiments of the disclosure may apply a high-pixel image sensor I having a calculated value of approximately 2.9 mm or greater according to [Equation 1], and, by satisfying the conditions defined in the following [Equations 2 to 11], may shorten the total length of the optical system, thereby enabling the provision of a slim and bright lens assembly 400 (e.g., having a small F-number or Fno).

According to an embodiment, the optical system including the lens assembly 400 may satisfy the following [Equation 2]:

[Equation 2]

$$f/EPD \leq 2.3$$

In [Equation 2], "f" may represent the effective focal length of the entire optical system including the lens assembly 400 and the image sensor I, and "EPD" (entrance pupil diameter) may represent the diameter of the entrance pupil.

According to an embodiment, [Equation 2] may define a condition for the F-number (Fno) value, which indicates the brightness of the optical system. According to an embodiment, when the calculated value of [Equation 2] is greater than approximately 2.3, the deflection limit may be lowered, which may result in an overall degradation in optical performance and a relatively darker brightness of the lens assembly 400.

According to an embodiment, the optical system including the lens assembly 400 may satisfy the following [Equation 3]:

[Equation 3]

$$TTL/(IH*2) < 0.74$$

In [Equation 3], "TTL" (total track length) may refer to the distance measured along the optical axis O from the object-side surface S3 of the first lens L1 to the imaging plane img (hereinafter referred to as "lens total length"). In [Equation 3], "IH" may represent half of the diagonal length of the image sensor I and may be the maximum value among the height or distance measured from the optical axis O to the edge of the imaging plane img.

According to an embodiment, [Equation 3] may define a condition for the degree of slimming (or a slim factor) of the optical system. According to an embodiment, when the calculated value of [Equation 3] is approximately 0.74 or greater, the total length of the lens may increase and the overall size of the optical system may become larger, which may go against the demand for miniaturization of the optical system.

According to an embodiment, the optical system including the lens assembly 400 may satisfy the following [Equation 4]:

[Equation 4]

$$N2 \geq 1.66$$

In [Equation 4], "N2" may represent the refractive index of the second lens L2 at a wavelength of approximately 587.6 nm.

According to an embodiment, by satisfying the refractive index condition defined in [Equation 4], it is possible to implement a compact optical system with improved chromatic aberration. According to an embodiment, when the calculated value of [Equation 4] is less than approximately 1.66, the field-of-view angle of the optical system may be reduced; however, it may become difficult to control aberration of the lenses L1, L2, L3, and L4 and to optimize lens performance (e.g., modulation transfer function, MTF), and the lens total length may increase, which may go against the demand for miniaturization of the optical system.

According to an embodiment, the optical system including the lens assembly 400 may satisfy the following [Equation 5]:

[Equation 5]

$$V2 < 25$$

In [Equation 5], "V2" may represent the Abbe number of the second lens L2 at a wavelength of approximately 587.6 nm.

According to an embodiment, by satisfying the Abbe number condition defined in [Equation 5], it is possible to implement an optical system with improved chromatic aberration control performance. According to an embodiment, when the calculated value of [Equation 5] is approximately 25 or greater, it may be difficult to ensure image quality of the optical system due to an increase in chromatic aberration, particularly longitudinal chromatic aberration. According to an embodiment, the second lens L2 may be a plastic lens and may have an Abbe number greater than approximately 17.

According to an embodiment, the optical system including the lens assembly 400 may satisfy the following [Equation 6]:

[Equation 6]

$$S2 / TTL \leq 0.9$$

In [Equation 6], "SD" (surface distance) may refer to the distance from the object-side surface S3 of the first lens L1 to the image-side surface S9 of the fourth lens L4, and "TTL" may refer to the distance from the object-side surface S3 of the first lens L1 to the imaging plane img. According to an embodiment, by satisfying the ratio condition between SD and TTL defined in [Equation 6], it is possible to implement an optical system with a reduced total length or miniaturized form. According to an embodiment, when the calculated value of [Equation 6] is greater than approximately 0.9, the distance from the object-side surface S3 of the first lens L1 to the image-side surface S9 of the fourth lens L4 may be unsuitable for mass production of the lens assembly 400, and, for example, manufacturing the lens assembly 400 may become impractical.

According to an embodiment, the optical system including the lens assembly 400 may satisfy the following [Equation 7]:

[Equation 7]

$$N3 \leq 1.6$$

In [Equation 7], "N3" may represent the refractive index of the third lens L3 at a wavelength of approximately 587.6 nm.

According to an embodiment, by satisfying the refractive index condition defined in [Equation 7], it is possible to implement an optical system with improved aberration characteristics. For example, when the calculated value of [Equation 7] exceeds approximately 1.6, the aberration control performance of the optical system may deteriorate.

According to an embodiment, the optical system including the lens assembly 400 may satisfy the following [Equation 8]:

[Equation 8]

$$N1 \leq 1.6$$

In [Equation 8], "N1" may represent the refractive index of the first lens L1 at a wavelength of approximately 587.6 nm.

According to an embodiment, by satisfying the refractive index condition defined in [Equation 8], it is possible to implement an optical system with improved aberration characteristics. For example, when the calculated value of [Equation 8] exceeds approximately 1.6, the aberration control performance of the optical system may deteriorate.

According to an embodiment, the optical system including the lens assembly 400 may satisfy the following [Equation 9]:

[Equation 9]

$$N4 < 1.6$$

In [Equation 9], "N4" may represent the refractive index of the fourth lens L4 at a wavelength of approximately 587.6 nm.

According to an embodiment, by satisfying the refractive index condition defined in [Equation 9], it is possible to implement an optical system with improved aberration characteristics. For example, when the calculated value of [Equation 9] exceeds approximately 1.6, the aberration control performance of the optical system may deteriorate.

According to an embodiment, the optical system including the lens assembly 400 may satisfy the following [Equation 10]:

[Equation 10]

$$CT2 \geq 0.15 \text{ mm}$$

In [Equation 10], "CT2" may represent the center thickness of the second lens L2. For example, the center thickness of the second lens L2 may be measured with respect to the optical axis O.

According to an embodiment, [Equation 10] may define a slimming condition of the optical system. For example, when the calculated value of [Equation 10] is less than approximately 0.15 mm, it may be difficult to achieve the desired slimming characteristics of the optical system.

According to an embodiment, the optical system including the lens assembly 400 may satisfy the following [Equation 11]:

[Equation 11]

$$IH/N2 \geq 1.7$$

In [Equation 11], "IH" may represent half of the diagonal length of the image sensor, and "N2" may represent the refractive index of the second lens at a wavelength of 587.6 nm.

According to an embodiment, [Equation 11] may define a slimming condition of the optical system. For example, when the calculated value of [Equation 11] is less than approximately 1.7, it may be difficult to achieve the slimming characteristics of the optical system or to ensure improved aberration performance.

The following [Table 1] shows the calculated values of [Equations 1 to 11] for the lens assemblies 400, 500, 600, 700, and 800 according to [Embodiment 1] and/or [Embodiments 2 to 5] described below. Referring to [Table 1], it can be seen that the lens assemblies 400, 500, 600, 700, and 800 according to [Embodiments 1 to 5] satisfy the conditions of [Equations 1 to 11].

[Table 1]

|  | Embodiment 1 | Embodiment 2 | Embodiment 3 | Embodiment 4 | Embodiment 5 |
|---|---|---|---|---|---|
| Equation 1 | 2.935 | 2.935 | 2.935 | 2.935 | 2.935 |
| Equation 2 | 2.25 | 2.26 | 2.26 | 2.25 | 2.25 |
| Equation 3 | 0.73 | 0.73 | 0.73 | 0.73 | 0.73 |
| Equation 4 | 1.67 | 1.67 | 1.67 | 1.67 | 1.67 |
| Equation 5 | 19.23 | 19.23 | 19.23 | 19.23 | 19.23 |
| Equation 6 | 0.75 | 0.74 | 0.75 | 0.75 | 0.75 |
| Equation 7 | 1.535 | 1.535 | 1.535 | 1.535 | 1.535 |
| Equation 8 | 1.54401 | 1.54401 | 1.54401 | 1.54401 | 1.54401 |
| Equation 9 | 1.535 | 1.535 | 1.535 | 1.535 | 1.535 |
| Equation 10 | 0.202 | 0.223 | 0.200 | 0.200 | 0.2 |
| Equation 11 | 1.757 | 1.757 | 1.757 | 1.757 | 1.757 |

As described above, the optical system including the lens assemblies 400, 500, 600, 700, and 800 according to an embodiment of the disclosure may apply an image sensor I having a diagonal length equal to or greater than a certain size (e.g., IH of approximately 2.9 mm or more), and may be implemented as a bright (e.g., having an Fno of approximately 2.3 or less) and compact or slimmed optical system with a shortened total length (e.g., a slim factor of 0.73 or less). According to an embodiment, the optical system including such lens assemblies 400, 500, 600, 700, and 800 may satisfy [Equations 1 to 6] described above and at least one of [Equations 7 to 11], and may be implemented by disposing a stop sto in front of the first lens L1 and optimizing the shapes of the third lens L3 and the fourth lens L4. [Embodiment 1]

In an embodiment, the optical system including the lens assembly 400 may be fabricated to conform to the shapes of the lenses L1, L2, L3, and L4 (e.g., lens surfaces) described above and to the conditions presented through [Equations 1 to 11] described above, and to have the specifications illustrated in the following [Table 2]. In [Table 2], Lens Surface 1 (e.g., S1 in FIG. 5) may represent a gap between the first lens L1 and the object obj, and the thickness value of the surface may correspond to the distance of the gap or an air gap. According to an embodiment, the optical system including the lens assembly 400 may have a combined effective focal length f of approximately 3.38 mm, an Fno value of approximately 2.25, and a field-of-view angle of approximately 80 degrees.

[Table 2]

| Lens Surface | Radius of Curvature | Thickness | Refractive Index (Nd) | Abbe Number (Vd) |
|---|---|---|---|---|
| obj | infinity | 400 |  |  |
| 1 | infinity | 0.330 |  |  |
| sto | infinity | -0.120 |  |  |
| 3 | 1.429 | 0.835 | 1.54400 | 55.91 |
| 4 | -3.634 | 0.020 |  |  |
| 5 | -35.438 | 0.202 | 1.67073 | 19.23 |
| 6 | 6.456 | 0.428 |  |  |
| 7 | -2.767 | 1.143 | 1.53500 | 55.71 |
| 8 | -1.386 | 0.157 |  |  |
| 9 | 2.212 | 0.435 | 1.53500 | 55.71 |
| 10 | 0.834 | 0.327 |  |  |
| 11 | infinity | 0.210 | 1.51680 | 64.2 |
| 12 | infinity | 0.479 |  |  |
| image | infinity | 0.034 |  |  |

[Tables 3] and [4] below show the aspheric coefficients of the lenses L1, L2, L3, and L4, and the aspheric coefficients may be calculated using the following [Mathematical Expression 1]:

[Expression 1]

$$x = \frac{(y^2/R)}{1 + \sqrt{1 - (1 + K)(y + R)^2}} = \sum_i (A_i)(y^i)$$

Here, "x" may represent the distance from the vertex of the lenses L1, L2, L3, and L4 in the direction of the optical axis O, "y" may represent the distance in a direction perpendicular to the optical axis O, "R" may represent the radius of curvature at the vertex of the lens, "K" may represent a conic constant, and "$A^i$" may represent an aspheric coefficient. For example, E+01 may indicate $10^1$, and E-02 may indicate $10^{-2}$. The radius of curvature R may represent, for example, a value indicating the degree of curvature at each point on a curved surface or curve.

[Table 3]

| Lens Surface | S3 | S4 | S5 | S6 |
|---|---|---|---|---|
| K | 1.5875E+00 | -9.5758E+01 | -7.2244E+01 | 4.3029E+01 |
| $A_4$ | -2.7619E-02 | -6.3597E-02 | 1.5255E-02 | 4.8306E-02 |
| $A_6$ | -2.3502E-03 | 1.0297E-03 | -4.0201E-03 | 1.5018E-03 |
| $A_8$ | -4.0966E-04 | -2.0398E-03 | -7.8488E-03 | 4.8650E-04 |
| $A_{10}$ | 2.4325E-06 | -1.2407E-03 | -1.6869E-03 | -1.8023E-05 |
| $A_{12}$ | -2.7173E-05 | -5.3696E-04 | 1.0867E-03 | 4.0368E-05 |
| $A_{14}$ | 8.8994E-06 | -3.9566E-04 | 1.2616E-03 | -9.6105E-06 |
| $A_{16}$ | -5.5680E-06 | -6.5929E-05 | 7.8896E-04 | 3.0422E-06 |
| $A_{18}$ | 4.3552E-06 | 1.6475E-04 | 7.1646E-05 | -9.6092E-06 |
| $A_{20}$ | -2.6313E-06 | 2.1297E-04 | -2.3468E-04 | 5.9640E-06 |
| $A_{22}$ | 8.5129E-07 | 2.2846E-04 | -1.4479E-04 | -6.4422E-06 |
| $A_{24}$ | -1.1640E-07 | 1.7037E-04 | -6.5596E-05 | 6.8597E-06 |
| $A_{26}$ | 1.6878E-09 | 1.1144E-04 | 0.0000E+00 | 2.7263E-06 |
| $A_{28}$ | 0.0000E+00 | 6.3725E-05 | 0.0000E+00 | -1.5042E-06 |
| $A_{30}$ | 0.0000E+00 | 2.7223E-05 | 0.0000E+00 | -1.6134E-06 |

[Table 4]

| Lens Surface | S7 | S8 | S9 | S10 |
|---|---|---|---|---|
| K | 6.5121E+00 | -1.2357E+00 | -9.2070E+01 | -4.8598E+00 |
| $A_4$ | -2.6070E-01 | -3.2071E-01 | -1.0869E+00 | -2.0070E+00 |
| $A_6$ | 9.9643E-03 | 8.6143E-02 | 4.1307E-01 | 3.6773E-01 |
| $A_8$ | 1.9766E-02 | -4.6813E-03 | -1.2008E-01 | -1.1945E-01 |
| $A_{10}$ | -7.7189E-03 | 3.9447E-03 | 1.8976E-02 | 8.8613E-02 |
| $A_{12}$ | -8.1034E-03 | -8.4426E-03 | -5.2865E-03 | -7.4568E-03 |
| $A_{14}$ | 2.3873E-03 | 4.2980E-04 | 5.1664E-03 | 1.8017E-02 |
| $A_{16}$ | 5.7636E-03 | -3.0078E-04 | -2.1572E-03 | -2.1075E-02 |
| $A_{18}$ | 3.1051E-04 | 6.9643E-04 | -1.5238E-05 | -1.6876E-02 |
| $A_{20}$ | -4.0191E-03 | -2.1575E-04 | 3.0941E-04 | -2.1468E-02 |
| $A_{22}$ | -2.7833E-03 | -8.7856E-05 | -2.9757E-04 | -1.3120E-02 |

(continued)

| Lens Surface | S7 | S8 | S9 | S10 |
|---|---|---|---|---|
| $A_{24}$ | 5.0837E-04 | -2.2053E-04 | 2.9351E-04 | -9.2199E-03 |
| $A_{26}$ | 1.7565E-03 | 1.0245E-04 | -1.5675E-04 | -4.6438E-03 |
| $A_{28}$ | 1.0667E-03 | 5.3444E-05 | -8.4663E-06 | -2.0636E-03 |
| $A_{30}$ | 2.5623E-04 | 5.5309E-05 | 2.5191E-05 | -5.7963E-04 |

[Embodiment 2]

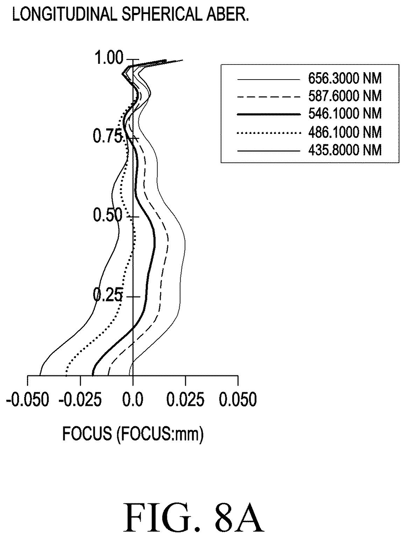

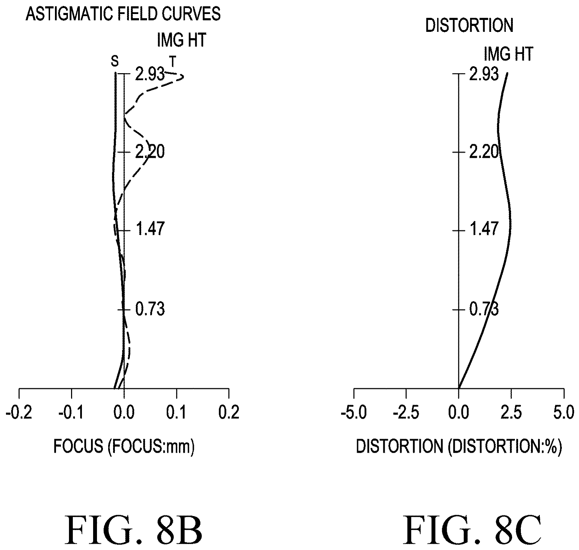

FIG. 7 is a configuration diagram illustrating an optical system including a lens assembly 500 and an image sensor I according to an embodiment of the disclosure. FIG. 8A is a graph showing spherical aberration of the lens assembly 500 of FIG. 7 according to an embodiment of the disclosure. FIG. 8B is a graph showing astigmatism of the lens assembly 500 of FIG. 7 according to an embodiment of the disclosure. FIG. 8C is a graph showing distortion of the lens assembly 500 of FIG. 7 according to an embodiment of the disclosure.

FIG. 8A is a graph showing spherical aberration of the lens assembly 500 according to an embodiment of the disclosure, in which the horizontal axis represents the coefficient of longitudinal spherical aberration, the vertical axis represents a normalized distance from the optical axis O, and variations in longitudinal spherical aberration are illustrated according to the wavelength of light. The longitudinal spherical aberration is shown for light having wavelengths of 656.2725 nm, 587.5618 nm, 546.0740 nm, 486.1327 nm, and 435.8343 nm, for example. FIG. 8B is a graph showing astigmatism of the lens assembly 500 according to an embodiment of the disclosure, based on light having a wavelength of 546.0740 nm. "S" denotes the sagittal plane, and "T" denotes the tangential plane. FIG. 8C is a graph showing distortion of the lens assembly 500 according to an embodiment of the disclosure, based on light having a wavelength of 546.0740 nm.

In an embodiment, the lens assembly 500 may satisfy at least some of the conditions presented through the shapes of the lenses (e.g., lens surfaces) described above with reference to FIG. 5 and the conditions defined by [Equations 1 to 11] described above. The lens assembly 500 may be manufactured according to the specifications illustrated in [Table 5], and may have aspheric coefficients as shown in [Table 6] and [Table 7]. In [Table 5], lens surface 1 may represent a gap between the first lens L1 and the object obj, and the measured value of its thickness may correspond to the distance of the gap or an air gap. According to an embodiment, the optical system including the lens assembly 500 may have a composite effective focal length f of approximately 3.38 mm, an Fno value of approximately 2.25, and a field of view of approximately 80 degrees.

[Table 5]

| Lens surface | Radius of Curvature | Thickness | Refractive index (Nd) | Abbe Number (Vd) |
|---|---|---|---|---|
| | | | | |
| obj | infinity | 400 | | |
| 1 | infinity | 0.334 | | |
| sto | infinity | -0.124 | | |
| 3 | 1.449 | 0.782 | 1.54400 | 55.91 |
| 4 | -400.152 | 0.071 | | |
| 5 | -27.452 | 0.223 | 1.67073 | 19.23 |
| 6 | 8.421 | 0.420 | | |
| 7 | -2.604 | 1.091 | 1.53500 | 55.71 |
| 8 | -1.288 | 0.165 | | |
| 9 | 1.980 | 0.421 | 1.53500 | 55.71 |
| 10 | 0.793 | 0.326 | | |
| 11 | infinity | 0.210 | 1.51680 | 64.20 |
| 12 | infinity | 0.542 | | |
| image | infinity | 0.019 | | |

[Table 6]

| Lens Surface | S3 | S4 | S5 | S6 |
|---|---|---|---|---|
| K | 1.4666E+00 | 9.9900E+01 | -9.9900E+01 | 4.1286E+01 |
| $A_4$ | -2.6994E-02 | -6.7566E-02 | 4.0591E-03 | 4.2487E-02 |
| $A_6$ | -2.5221E-03 | 8.6464E-04 | 2.2473E-03 | 3.5909E-03 |
| $A_8$ | -3.5717E-04 | 3.0260E-04 | -7.1798E-03 | 3.0429E-04 |
| $A_{10}$ | -1.5236E-05 | 1.8603E-05 | -1.9942E-03 | 4.6305E-05 |
| $A_{12}$ | -2.0152E-05 | 1.5498E-04 | 9.9045E-04 | 1.6650E-05 |
| $A_{14}$ | 4.7556E-06 | -1.1098E-05 | 1.2257E-03 | 9.9383E-06 |
| $A_{16}$ | -2.8553E-06 | -6.9054E-05 | 6.1981E-04 | -7.8287E-06 |
| $A_{18}$ | 3.8182E-06 | -9.4658E-05 | -1.4799E-05 | 1.6668E-06 |
| $A_{20}$ | -2.3135E-06 | -8.7644E-05 | -2.4033E-04 | 4.4848E-08 |
| $A_{22}$ | 6.9523E-07 | -6.7085E-05 | -1.5549E-04 | 2.4898E-06 |
| $A_{24}$ | -1.1008E-07 | -3.6662E-05 | -4.7366E-05 | 1.2642E-06 |
| $A_{26}$ | 4.4776E-09 | -2.0801E-05 | 0.0000E+00 | 5.6149E-06 |
| $A_{28}$ | 0.0000E+00 | 5.7917E-06 | 0.0000E+00 | -3.1479E-06 |
| $A_{30}$ | 0.0000E+00 | 1.2352E-06 | 0.0000E+00 | -4.0064E-06 |

[Table 7]

| Lens Surface | S7 | S8 | S9 | S10 |
|---|---|---|---|---|
| K | 7.6283E+00 | -1.6550E+00 | -6.2627E+01 | -4.6979E+00 |
| $A_4$ | -1.4307E-01 | -2.9944E-01 | -9.0896E-01 | -2.2509E+00 |
| $A_6$ | 1.5320E-02 | 6.6359E-02 | 3.6576E-01 | 1.3589E-01 |
| $A_8$ | 8.2107E-03 | -5.8346E-03 | -1.0926E-01 | -3.4787E-01 |
| $A_{10}$ | -7.2111E-03 | 1.0370E-03 | 2.2032E-02 | -3.7774E-02 |
| $A_{12}$ | -4.6966E-03 | -7.3039E-03 | -5.4683E-03 | -5.1602E-02 |
| $A_{14}$ | 2.6438E-03 | -5.8994E-05 | 2.9989E-03 | 2.6103E-02 |
| $A_{16}$ | 4.1433E-03 | -6.6250E-04 | -1.1545E-03 | 3.2964E-03 |
| $A_{18}$ | 2.4039E-05 | 4.0298E-04 | -1.5302E-04 | 7.3773E-03 |
| $A_{20}$ | -3.4059E-03 | -2.9654E-04 | 3.6367E-04 | -3.5599E-03 |
| $A_{22}$ | -2.3787E-03 | -4.7012E-05 | -2.1555E-04 | -2.1301E-03 |
| $A_{24}$ | 4.4102E-04 | -1.4260E-04 | 1.7697E-04 | -2.5283E-03 |
| $A_{26}$ | 1.8095E-03 | 2.4754E-05 | -1.4797E-04 | -5.1645E-04 |
| $A_{28}$ | 1.2147E-03 | -1.6819E-05 | 6.0570E-05 | -6.1523E-05 |
| $A_{30}$ | 3.4165E-04 | 2.2727E-05 | -8.8430E-06 | -8.9019E-05 |

[Embodiment 3]

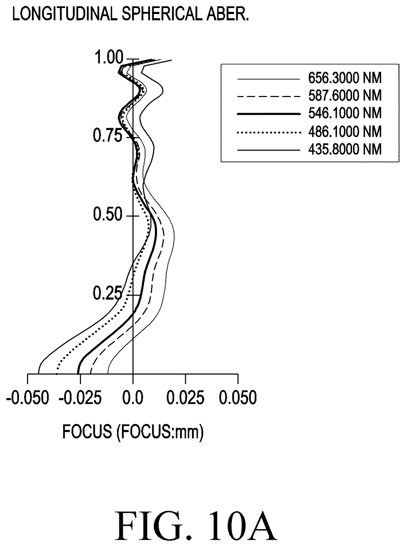

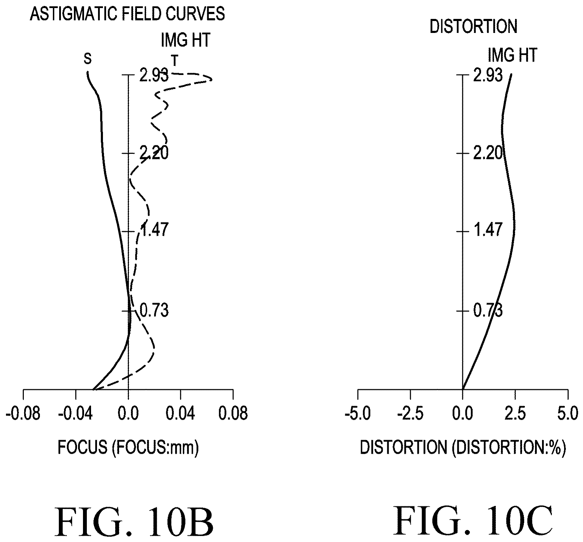

FIG. 9 is a configuration diagram illustrating an optical system including a lens assembly 600 and an image sensor I according to an embodiment of the disclosure. FIG. 10A is a graph showing spherical aberration of the lens assembly 600 of FIG. 9 according to an embodiment of the disclosure. FIG. 10B is a graph showing astigmatism of the lens assembly 600 of FIG. 9 according to an embodiment of the disclosure. FIG. 10C is a graph showing distortion of the lens assembly 600 of FIG. 9 according to an embodiment of the disclosure.

In an embodiment, the lens assembly 600 may satisfy at least some of the conditions presented through the shapes of the lenses (e.g., lens surfaces) described above with reference to FIG. 5 and the conditions defined by [Equations 1 to 11]. The lens assembly 600 may be manufactured according to the specifications illustrated in [Table 8], and may have aspheric coefficients shown in [Table 9] and [Table 10]. In [Table 8], lens surface 1 may represent a gap between the first lens L1 and the object obj, and the measured value of its thickness may correspond to the distance of the gap or an air gap. According to an embodiment, the optical system including the lens assembly 600 may have a composite effective focal length f of approximately 3.38 mm, an Fno value of approximately 2.26, and a field of view of approximately 80 degrees.

[Table 8]

| Lens surface | Radius of Curvature | Thickness | Refractive index (Nd) | Abbe Number (Vd) |
|---|---|---|---|---|
| obj | infinity | 400 | | |
| 1 | infinity | 0.330 | | |
| sto | infinity | -0.119 | | |
| 3 | 1.364 | 0.795 | 1.54400 | 55.91 |
| 4 | -63.822 | 0.003 | | |
| 5 | 53.675 | 0.200 | 1.67073 | 19.23 |
| 6 | 4.871 | 0.429 | | |
| 7 | -2.822 | 1.239 | 1.53500 | 55.71 |
| 8 | -1.309 | 0.111 | | |
| 9 | 2.675 | 0.444 | 1.53500 | 55.71 |
| 10 | 0.871 | 0.327 | | |
| 11 | infinity | 0.210 | 1.51680 | 64.20 |
| 12 | infinity | 0.487 | | |
| image | infinity | 0.027 | | |

[Table 9]

| Lens Surface | S3 | S4 | S5 | S6 |
|---|---|---|---|---|
| K | 1.5348E+00 | 9.9900E+01 | -9.9900E+01 | 3.7324E+01 |
| $A_4$ | -2.9245E-02 | -6.9346E-02 | 1.8898E-02 | 4.5427E-02 |
| $A_6$ | -3.0333E-03 | 4.1493E-03 | -8.9966E-04 | -4.4000E-05 |
| $A_8$ | -4.4885E-04 | -2.7650E-03 | -9.1180E-03 | 1.0939E-04 |
| $A_{10}$ | -3.8599E-05 | 3.2112E-04 | -1.2175E-03 | -2.1651E-04 |
| $A_{12}$ | -1.8547E-05 | -4.5716E-04 | 9.6967E-05 | -1.0921E-04 |
| $A_{14}$ | -2.9001E-06 | -1.4750E-04 | 1.6048E-03 | -1.0129E-04 |
| $A_{16}$ | -2.5407E-06 | -3.8662E-04 | 1.0467E-03 | -8.3257E-05 |
| $A_{18}$ | 4.9362E-06 | -5.7790E-05 | 3.6148E-04 | -7.1792E-05 |
| $A_{20}$ | -2.5332E-06 | -2.1644E-04 | -4.1487E-04 | -5.2722E-05 |
| A22 | 6.9618E-07 | -2.8501E-05 | -3.0209E-04 | -4.5816E-05 |
| A24 | -1.4562E-07 | -5.0438E-05 | -2.5879E-04 | -2.9991E-05 |
| A26 | 1.5761E-08 | -2.4850E-05 | 0.0000E+00 | -2.2657E-05 |
| $A_{28}$ | 0.0000E+00 | 1.3279E-06 | 0.0000E+00 | -1.1918E-05 |
| A30 | 0.0000E+00 | 4.5981E-06 | 0.0000E+00 | -4.9102E-06 |

[Table 10]

| Lens surface | S7 | S8 | S9 | S10 |
|---|---|---|---|---|
| K | 8.5179E+00 | -1.3237E+00 | -9.5591E+01 | -3.9800E+00 |
| $A_4$ | -2.2181E-01 | -3.1221E-01 | -1.0102E+00 | -2.0120E+00 |
| $A_6$ | 1.0652E-02 | 8.7614E-02 | 4.0954E-01 | 4.1941E-01 |
| $A_8$ | 1.5338E-02 | -2.0262E-03 | -1.1375E-01 | -2.0805E-01 |
| $A_{10}$ | -7.0074E-03 | 2.6691E-03 | 1.6889E-02 | 4.1445E-02 |
| $A_{12}$ | -7.0994E-03 | -7.7434E-03 | -3.2413E-03 | -4.0088E-02 |
| $A_{14}$ | 2.3281E-03 | -5.9034E-05 | 3.4119E-03 | 1.3117E-02 |
| $A_{16}$ | 5.1020E-03 | -1.1311E-04 | -1.6581E-03 | -1.6466E-02 |
| $A_{18}$ | 2.8065E-04 | 4.4172E-04 | -1.3843E-04 | -1.0943E-02 |
| $A_{20}$ | -3.9221E-03 | -1.9047E-05 | 3.8914E-04 | -1.8946E-02 |
| $A_{22}$ | -2.7193E-03 | -6.7024E-05 | -1.7707E-04 | -1.3324E-02 |
| $A_{24}$ | 5.5614E-04 | -2.1960E-05 | 1.5315E-04 | -1.0108E-02 |
| $A_{26}$ | 2.0243E-03 | 2.8870E-05 | -1.3745E-04 | -4.4938E-03 |
| $A_{28}$ | 1.3259E-03 | 1.1297E-05 | 5.5492E-05 | -1.6836E-03 |
| $A_{30}$ | 3.6414E-04 | -1.8443E-05 | -7.8813E-06 | -2.4294E-04 |

[Embodiment 4]

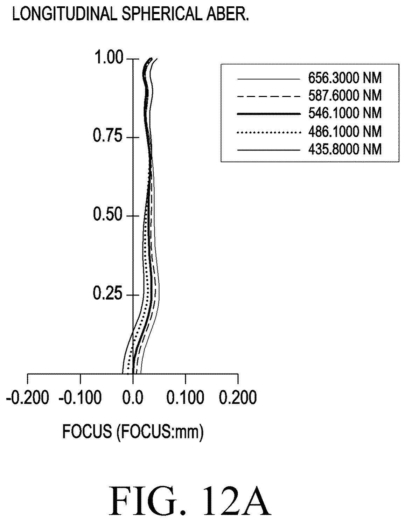

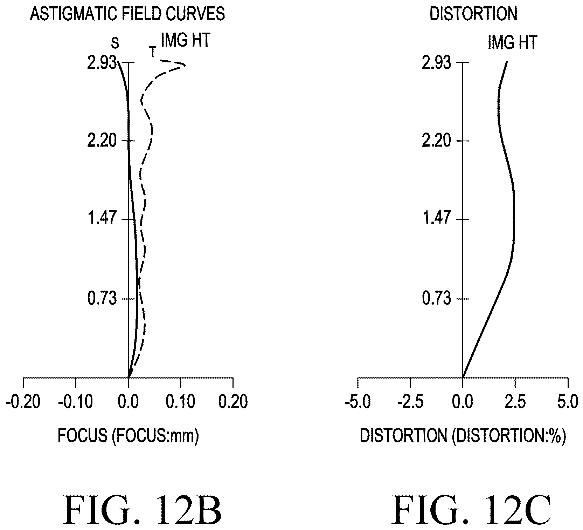

FIG. 11 is a configuration diagram illustrating an optical system including a lens assembly 700 and an image sensor I according to an embodiment of the disclosure. FIG. 12A is a graph showing spherical aberration of the lens assembly 700 of FIG. 11 according to an embodiment of the disclosure. FIG. 12B is a graph showing astigmatism of the lens assembly 700 of FIG. 11 according to an embodiment of the disclosure. FIG. 12C is a graph showing distortion of the lens assembly 700 of FIG. 11 according to an embodiment of the disclosure.

In an embodiment, the lens assembly 700 may satisfy at least some of the conditions presented through the shapes of the lenses (e.g., lens surfaces) described above with reference to FIG. 5 and the conditions defined by [Equations 1 to 11]. The lens assembly 700 may be manufactured according to the specifications illustrated in [Table 11], and may have aspheric coefficients shown in [Table 12] and [Table 13]. In [Table 11], lens surface 1 may represent a gap between the first lens L1 and the object obj, and the measured value of its thickness may correspond to the distance of the gap or an air gap. According to an embodiment, the optical system including the lens assembly 700 may have a composite effective focal length f of approximately 3.38 mm, an Fno value of approximately 2.25, and a field of view of approximately 80 degrees.

[Table 11]

| Lens surface | Radius of Curvature | Thickness | Refractive index (Nd) | Abbe Number (Vd) |
|---|---|---|---|---|
| obj | infinity | 400 | | |
| 1 | infinity | 0.330 | | |
| sto | infinity | -0.120 | | |
| 3 | 1.406 | 0.844 | 1.54400 | 55.91 |
| 4 | -23.608 | 0.020 | | |
| 5 | -66.332 | 0.200 | 1.67073 | 19.23 |
| 6 | 5.840 | 0.421 | | |
| 7 | -2.807 | 1.187 | 1.53500 | 55.71 |
| 8 | -1.324 | 0.113 | | |
| 9 | 2.497 | 0.433 | 1.53500 | 55.71 |

(continued)

| Lens surface | Radius of Curvature | Thickness | Refractive index (Nd) | Abbe Number (Vd) |
|---|---|---|---|---|
| 10 | 0.851 | 0.327 | | |
| 11 | infinity | 0.210 | 1.51680 | 64.20 |
| 12 | infinity | 0.487 | | |
| image | infinity | 0.028 | | |

[Table 12]

| Lens surface | S3 | S4 | S5 | S6 |
|---|---|---|---|---|
| K | 1.5699E+00 | -9.4167E+01 | 9.9900E+01 | 4.0139E+01 |
| $A_4$ | -2.8138E-02 | -6.6419E-02 | 1.5082E-02 | 4.7272E-02 |
| $A_6$ | -2.5459E-03 | 1.1953E-03 | -3.4003E-03 | 9.3520E-04 |
| $A_8$ | -4.2086E-04 | -1.2682E-03 | -7.5040E-03 | 6.3411E-04 |
| $A_{10}$ | -8.5630E-06 | -9.2651E-04 | -1.9756E-03 | -7.5903E-05 |
| $A_{12}$ | -2.6520E-05 | -3.2563E-04 | 1.0190E-03 | 5.8638E-05 |
| $A_{14}$ | 6.3248E-06 | -3.5114E-04 | 1.1519E-03 | -9.9811E-06 |
| $A_{16}$ | -4.6292E-06 | -2.0066E-04 | 8.7572E-04 | 1.5207E-05 |
| $A_{18}$ | 4.2912E-06 | -1.0220E-05 | 2.2366E-04 | -1.1661E-05 |
| $A_{20}$ | -2.4125E-06 | 1.7819E-05 | -1.1358E-04 | 1.2149E-05 |
| $A_{22}$ | 7.5836E-07 | 6.6887E-05 | -6.8368E-05 | -6.4415E-06 |
| $A_{24}$ | -1.4545E-07 | 5.7622E-05 | -4.6356E-05 | 8.2619E-06 |
| $A_{26}$ | 1.3364E-08 | 4.7558E-05 | 0.0000E+00 | 4.5595E-07 |
| $A_{28}$ | 0.0000E+00 | 3.2201E-05 | 0.0000E+00 | -2.3246E-06 |
| $A_{30}$ | 0.0000E+00 | 1.9670E-05 | 0.0000E+00 | -5.7364E-06 |

[Table 13]

| Lens surface | S7 | S8 | S9 | S10 |
|---|---|---|---|---|
| K | 9.3735E+00 | -1.3308E+00 | -9.9900E+01 | -3.6064E+00 |
| $A_4$ | -2.3822E-01 | -3.0815E-01 | -1.0289E+00 | -2.0984E+00 |
| $A_6$ | 5.3965E-03 | 8.2326E-02 | 4.1761E-01 | 4.3746E-01 |
| $A_8$ | 1.9039E-02 | -1.3529E-03 | -1.1655E-01 | -1.8906E-01 |
| $A_{10}$ | -6.4285E-03 | 2.6692E-03 | 1.6410E-02 | 6.0135E-02 |
| $A_{12}$ | -7.6609E-03 | -8.1085E-03 | -3.0666E-03 | -3.7346E-02 |
| $A_{14}$ | 1.6687E-03 | -1.7056E-04 | 3.3946E-03 | 2.0144E-02 |
| $A_{16}$ | 5.6064E-03 | -3.3109E-04 | -1.7060E-03 | -1.2382E-02 |
| $A_{18}$ | 5.2489E-04 | 6.3821E-04 | -1.6873E-04 | -7.5369E-03 |
| $A_{20}$ | -4.0772E-03 | -3.7609E-05 | 3.7659E-04 | -1.9315E-02 |
| $A_{22}$ | -2.9542E-03 | 2.9651E-05 | -1.7048E-04 | -1.5195E-02 |
| $A_{24}$ | 5.8135E-04 | -7.2570E-05 | 1.5742E-04 | -1.3262E-02 |
| $A_{26}$ | 2.0082E-03 | 8.4053E-05 | -1.3502E-04 | -7.1359E-03 |
| $A_{28}$ | 1.2646E-03 | 2.6665E-06 | 5.4924E-05 | -3.4486E-03 |

(continued)

| Lens surface | S7 | S8 | S9 | S10 |
|---|---|---|---|---|
| $A_{30}$ | 3.1135E-04 | -5.2046E-06 | -8.0836E-06 | -8.0208E-04 |

[Embodiment 5]

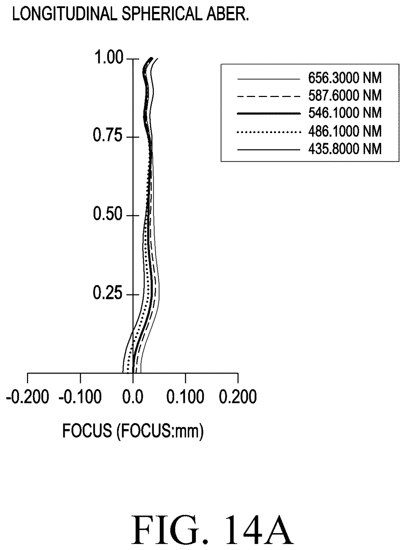

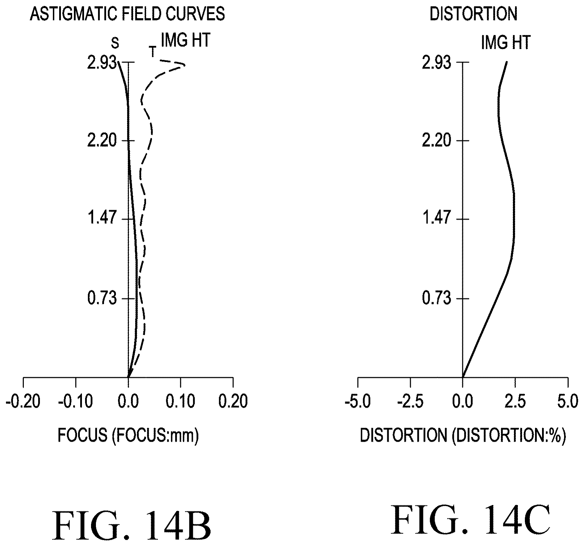

FIG. 13 is a configuration diagram illustrating an optical system including a lens assembly 800 and an image sensor I according to an embodiment of the disclosure. FIG. 14A is a graph showing spherical aberration of the lens assembly 800 of FIG. 13 according to an embodiment of the disclosure. FIG. 14B is a graph showing astigmatism of the lens assembly 800 of FIG. 13 according to an embodiment of the disclosure. FIG. 14C is a graph showing distortion of the lens assembly 800 of FIG. 13 according to an embodiment of the disclosure.

In an embodiment, the lens assembly 800 may satisfy at least some of the conditions presented through the shapes of the lenses (e.g., lens surfaces) described above with reference to FIG. 5 and the conditions defined by [Equations 1 to 11]. The lens assembly 800 may be manufactured according to the specifications illustrated in [Table 14], and may have aspheric coefficients shown in [Table 15] and [Table 16]. In [Table 14], lens surface 1 may represent a gap between the first lens L1 and the object obj, and the measured value of its thickness may correspond to the distance of the gap or an air gap. According to an embodiment, the optical system including the lens assembly 800 may have a composite effective focal length f of approximately 3.39 mm, an Fno value of approximately 2.25, and a field of view of approximately 80 degrees.

[Table 14]

| Lens surface | Radius of Curvature | Thickness | Refractive index (Nd) | Abbe Number (Vd) |
|---|---|---|---|---|
| obj | infinity | 400 | | |
| 1 | infinity | 0.330 | | |
| sto | infinity | -0.120 | | |
| 3 | 1.405 | 0.844 | 1.54400 | 55.91 |
| 4 | -23.472 | 0.020 | | |
| 5 | -65.564 | 0.200 | 1.67073 | 19.23 |
| 6 | 5.817 | 0.421 | | |
| 7 | -2.819 | 1.190 | 1.53500 | 55.71 |
| 8 | -1.332 | 0.110 | | |
| 9 | 2.459 | 0.432 | 1.53500 | 55.71 |
| 10 | 0.848 | 0.327 | | |
| 11 | infinity | 0.210 | 1.51680 | 64.20 |
| 12 | infinity | 0.487 | | |
| image | infinity | 0.029 | | |

[Table 15]

| Lens surface | S3 | S4 | S5 | S6 |
|---|---|---|---|---|
| K | 1.5689E+00 | -9.9900E+01 | 9.9900E+01 | 4.0112E+01 |
| $A_4$ | -2.8184E-02 | -6.6431E-02 | 1.5258E-02 | 4.7143E-02 |
| $A_6$ | -2.5508E-03 | 1.2199E-03 | -3.2785E-03 | 9.5135E-04 |
| $A_8$ | -4.2350E-04 | -1.2436E-03 | -7.5082E-03 | 6.4196E-04 |
| $A_{10}$ | -8.2086E-06 | -9.1783E-04 | -2.0080E-03 | -6.9703E-05 |
| $A_{12}$ | -2.7075E-05 | -3.2482E-04 | 1.0234E-03 | 5.5826E-05 |
| $A_{14}$ | 5.9824E-06 | -3.4803E-04 | 1.1645E-03 | -7.7338E-06 |

(continued)

| Lens surface | S3 | S4 | S5 | S6 |
|---|---|---|---|---|
| $A_{16}$ | -4.3710E-06 | -2.1129E-04 | 8.7542E-04 | 1.3539E-05 |
| $A_{18}$ | 4.3665E-06 | -1.7460E-05 | 2.2666E-04 | -1.0946E-05 |
| $A_{20}$ | -2.4543E-06 | 5.7886E-06 | -1.1945E-04 | 1.1831E-05 |
| $A_{22}$ | 7.5491E-07 | 5.7539E-05 | -6.9230E-05 | -6.4598E-06 |
| $A_{24}$ | -1.4724E-07 | 5.0427E-05 | -4.9191E-05 | 7.4372E-06 |
| $A_{26}$ | 1.4526E-08 | 4.3236E-05 | 0.0000E+00 | 7.8573E-08 |
| $A_{28}$ | 0.0000E+00 | 3.0152E-05 | 0.0000E+00 | -2.6221E-06 |
| A30 | 0.0000E+00 | 1.8802E-05 | 0.0000E+00 | -5.5278E-06 |

[Table 16]

| Lens surface | S7 | S8 | S9 | S10 |
|---|---|---|---|---|
| K | 9.4121E+00 | -1.3205E+00 | -9.9484E+01 | -3.6461E+00 |
| $A_4$ | -2.3580E-01 | -3.0856E-01 | -1.0302E+00 | -2.0817E+00 |
| $A_6$ | 5.1093E-03 | 8.3635E-02 | 4.1747E-01 | 4.3463E-01 |
| $A_8$ | 1.8815E-02 | -1.7189E-03 | -1.1594E-01 | -1.8548E-01 |
| $A_{10}$ | -6.4203E-03 | 3.0753E-03 | 1.6341E-02 | 5.6960E-02 |
| $A_{12}$ | -7.6638E-03 | -8.2612E-03 | -3.2043E-03 | -4.0944E-02 |
| $A_{14}$ | 1.6722E-03 | -1.1123E-04 | 3.5029E-03 | 1.5768E-02 |
| $A_{16}$ | 5.5722E-03 | -4.1205E-04 | -1.7136E-03 | -1.4961E-02 |
| $A_{18}$ | 5.2415E-04 | 6.4340E-04 | -1.7002E-04 | -8.6981E-03 |
| $A_{20}$ | -4.0795E-03 | -7.1909E-05 | 3.7839E-04 | -1.9145E-02 |
| $A_{22}$ | -2.9901E-03 | 2.8038E-05 | -1.7060E-04 | -1.4549E-02 |
| $A_{24}$ | 5.4086E-04 | -8.8933E-05 | 1.5701E-04 | -1.2516E-02 |
| $A_{26}$ | 2.0145E-03 | 8.1152E-05 | -1.3546E-04 | -6.6469E-03 |
| $A_{28}$ | 1.2937E-03 | 2.0861E-06 | 5.5154E-05 | -3.2076E-03 |
| A30 | 3.2743E-04 | 2.9833E-06 | -8.1245E-06 | -7.5351E-04 |

As described above, the optical system including the lens assemblies 400, 500, 600, 700, and 800 according to an embodiment of the disclosure may apply a high-pixel image sensor I having a diagonal length equal to or greater than a certain size (e.g., IH of approximately 2.9 mm or more), and may be implemented as a bright (e.g., having an Fno of approximately 2.3 or less), compact or slimmed optical system with a reduced total length (e.g., a slim factor of 0.73 or less). According to an embodiment, the optical system including such lens assemblies may satisfy [Equations 1 to 6] described above and at least one of [Equations 7 to 11], and may be implemented by arranging a stop sto in front of the first lens L1 and optimizing the shapes of the third lens L3 and the fourth lens L4. For example, the lens assemblies 400, 500, 600, 700, and 800, each including four lenses, may provide optical performance equal to or better than that of lens assemblies including five or more lenses. For instance, at least one high-refractive-index lens (e.g., the second lens L2) may be included, and the other lenses (e.g., the first lens L1, the third lens L3, and the fourth lens L4) may be formed of relatively low-refractive-index materials, thereby enabling the implementation of a low-cost or entry-level lens assembly 400, 500, 600, 700, or 800 with reduced manufacturing cost.

An optical system including a plurality of lenses may be applied to camera modules of various electronic devices, such as smartphones, tablet PCs, smartwatches, and drones. In general, aberration caused by the shapes of lenses occurs in an optical system, and it is necessary to minimize such aberration to provide favorable optical performance. Typically, in order to reduce aberration in an optical system, a method such as using a relatively small sensor, applying a dark lens with a large sensor, or increasing the total length of the lens system may be applied.

An embodiment disclosed herein is intended to at least address the above-described problems and/or disadvantages and to at least provide the advantages described below. The embodiment may provide an optical system including a lens assembly optimized for a high-resolution image sensor, in which the total length is reduced and the optical performance (aberration control and brightness) is improved, as well as an electronic device including the same.

According to various embodiments disclosed herein, the optical system may be suitably mounted in miniaturized and/or lightweight electronic devices such as smartphones, and may contribute to the expansion of optical functions or the enhancement of optical performance of the electronic device.

The technical objectives intended to be achieved by the disclosure are not limited to those described above, and other technical objectives not explicitly mentioned will be clearly understood by those of ordinary skill in the art based on the description of the disclosure.

The effects obtainable from the disclosure are not limited to those described above, and other effects not explicitly mentioned will be clearly understood by those of ordinary skill in the art based on the description of the disclosure.

According to an embodiment of the disclosure, an electronic device may be provided. The electronic device may include a lens assembly 400, 500, 600, 700, or 800, and an image sensor I including an imaging plane img on which an image is formed. The lens assembly may include at least four lenses sequentially arranged along an optical axis O from an object side obj toward the imaging plane img, and may include a first lens L1, a second lens L2 having an image-side surface S6 with a concave shape toward the image side, a third lens L3, and a fourth lens L4. The electronic device (or the entire optical system including the lens assembly and the image sensor) may satisfy [Equations 1] to [Equation 4] below:

[Equation 1]

$$IH \geq 2.9 \text{ mm}$$

[Equation 2]

$$f/EPD \leq 2.3$$

[Equation 3]

$$TTL/(IH*2) < 0.74$$

[Equation 4]

$$N2 \geq 1.66$$

wherein, in [Equation 1] and [Equation 3], "IH" is half of a diagonal length of the image sensor; in [Equation 2], "f" is a composite effective focal length of the entire optical system including the lens assembly and the image sensor, and "EPD" is an entrance pupil diameter; in [Equation 3], "TTL" is a distance from an object-side surface S3 of the first lens to the imaging plane; and in [Equation 4], "N2" is a refractive index of the second lens at a wavelength of 587.6 nm.

According to an embodiment, the second lens may satisfy [Equation 5] below:

[Equation 5]

$$V2 < 25$$

wherein "V2" is an Abbe number of the second lens at a wavelength of 587.6 nm.

According to an embodiment, an object-side surface S3 of the first lens may have a convex shape toward the object side.

According to an embodiment, the third lens may have a meniscus shape that is curved toward the image side.

According to an embodiment, the electronic device (or the entire optical system including the lens assembly and the image sensor) may satisfy [Equation 6] below:

$$[\text{Equation 6}]$$

$$S2/TTL \leq 0.9$$

wherein "SD" is a distance from the object-side surface of the first lens to an image-side surface S9 of the fourth lens, and "TTL" is a distance from the object-side surface of the first lens to the imaging plane.

According to an embodiment, the third lens may satisfy [Equation 7] below:

$$[\text{Equation 7}]$$

$$N3 \leq 1.6$$

wherein "N3" is a refractive index of the third lens at a wavelength of 587.6 nm.

According to an embodiment, the first lens may satisfy [Equation 8] below:

$$[\text{Equation 8}]$$

$$*232N1 \leq 1.6$$

wherein "N1" is a refractive index of the first lens at a wavelength of 587.6 nm.

According to an embodiment, the fourth lens may satisfy [Equation 9] below:

$$[\text{Equation 9}]$$

$$N4 < 1.6$$

wherein "N4" is a refractive index of the fourth lens at a wavelength of 587.6 nm.

According to an embodiment, the second lens may have a negative refractive power and satisfy [Equation 10] below:

$$[\text{Equation 10}]$$

$$CT2 \geq 0.15 \text{ mm}$$

wherein "CT2" is a center thickness of the second lens.

According to an embodiment, the third lens may have a positive refractive power, and an image-side surface S8 of the third lens may have a convex shape toward the image side.

According to an embodiment, at least one of an object-side surface S9 or an image-side surface S 10 of the fourth lens may be formed as an aspherical surface.

According to an embodiment, at least one aspherical surface among the object-side surface or the image-side surface of the fourth lens may include at least one inflection point.

According to an embodiment, the electronic device (or the entire optical system including the lens assembly and the image sensor) may satisfy [Equation 11] below:

$$[\text{Equation 11}]$$

$$IH/N2 \geq 1.7$$

wherein "IH" is half of a diagonal length of the image sensor, and "N2" is a refractive index of the second lens at a wavelength of 587.6 nm.

According to an embodiment, the lens assembly may further include a stop sto disposed between an object and the first lens.

According to an embodiment, the lens assembly may constitute a camera module of the electronic device having a field of view equal to or less than 90 degrees.

According to an embodiment of the disclosure, an optical system may be provided. The optical system may include a lens assembly 400, 500, 600, 700, or 800 and an image sensor I including an imaging plane img on which an image is formed. The lens assembly may include at least four lenses sequentially arranged along an optical axis O from an object side obj toward an image side, and may include a first lens L1, a second lens L2 having an image-side surface S6 with a concave shape toward the image side, a third lens L3, a fourth lens L4, and a stop sto disposed between an object and the first lens. The optical system may have a field of view equal to or less than 90 degrees and may satisfy [Equations 1] to [Equation 4] below:

$$[\text{Equation 1}]$$

$$IH \geq 2.9 \text{ mm}$$

$$[\text{Equation 2}]$$

$$f / EPD \leq 2.3$$

$$[\text{Equation 3}]$$

$$TTL / (IH*2) < 0.74$$

$$[\text{Equation 4}]$$

$$N2 \geq 1.66$$

wherein, in [Equation 1] and [Equation 3], "IH" is half of a diagonal length of the image sensor; in [Equation 2], "f" is a composite effective focal length of the entire optical system including the lens assembly and the image sensor, and "EPD" is an entrance pupil diameter; in [Equation 3], "TTL" is a distance from an object-side surface S3 of the first lens to the imaging plane; and in [Equation 4], "N2" is a refractive index of the second lens at a wavelength of 587.6 nm.

According to an embodiment, the second lens may satisfy [Equation 5] below:

[Equation 5]

$$V2 < 25$$

wherein "V2" is an Abbe number of the second lens at a wavelength of 587.6 nm.

According to an embodiment, the optical system may satisfy [Equation 6] below:

[Equation 6]

$$S2/TTL \leq 0.9$$

wherein "SD" is a distance from the object-side surface of the first lens to an image-side surface S9 of the fourth lens, and "TTL" is a distance from the object-side surface of the first lens to the imaging plane.

According to an embodiment, the third lens and the fourth lens may respectively satisfy [Equations 7 and 8] below:

[Equation 7]

$$N3 \leq 1.6$$

[Equation 8]

$$N1 \leq 1.6$$

wherein "N3" in [Equation 7] is a refractive index of the third lens at a wavelength of 587.6 nm, and "N1" in [Equation 8] is a refractive index of the first lens at a wavelength of 587.6 nm.

According to an embodiment, the fourth lens may satisfy [Equation 9] below, and the second lens may have a negative refractive power and satisfy [Equation 10] below:

[Equation 9]

$$N4 < 1.6$$

[Equation 10]

$$CT2 \geq 0.15 \text{ mm}$$

wherein "N4" in [Equation 9] is a refractive index of the fourth lens at a wavelength of 587.6 nm, and "CT2" in [Equation 10] is a center thickness of the second lens.

An embodiment disclosed in the disclosure should not be construed as limiting the invention but rather understood as an example. It will be apparent to those skilled in the art that various changes in form and detail may be made without departing from the spirit and scope of the disclosure, including the appended claims and equivalents thereof.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that one embodiment of the disclosure and the terms used therein are not intended to limit the technological features set forth herein to portionicular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "portion," or "circuitry". A module may be a single integral component, or a minimum unit or portion thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is leadable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium leadable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-leadable storage medium (e.g., compact disc lead only memory (CD-ROM)), or be distributed (e.g., downloaded or uploaded) online via an application store (e.g., Play StoreTM), or between two user devices (e.g., smartphones) directly. If distributed online, at least portion of the computer program product may be temporarily generated or at least temporarily stored in the machine-leadable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  An electronic device comprising:

    a lens assembly (400; 500; 600; 700; 800) including at least four lenses sequentially arranged along an optical axis (O) from an object side (obj) toward an image side, the lens assembly comprising a first lens (L1), a second lens (L2) having an image-side surface (S6) with a concave shape toward the image side, a third lens (L3), and a fourth lens (L4); and
an image sensor (I) including an imaging plane (img) on which an image is formed,
wherein the electronic device satisfies the following [Equation 1] to [Equation 4]:

[Equation 1]

$$IH \geq 2.9mm$$

[Equation 2]

$$f/EPD \leq 2.3$$

[Equation 3]

$$TTL/\,(IH*2) < 0.74$$

[Equation 4]

$$N2 \geq 1.66$$

wherein, in [Equation 1] and [Equation 3], "IH" is half of a diagonal length of the image sensor; in [Equation 2], "f" is an effective focal length of an entire optical system including the lens assembly and the image sensor, and "EPD" is an entrance pupil diameter; in [Equation 3], "TTL" is a distance from an object-side surface (S3) of the first lens to the imaging plane; and in [Equation 4], "N2" is a refractive index of the second lens at a wavelength of 587.6 nm.

2. The electronic device of claim 1,

wherein the second lens satisfies the following [Equation 5]:

[Equation 5]

$$V2 < 25$$

wherein "V2" is an Abbe number of the second lens at a wavelength of 587.6 nm.

3. The electronic device of claim 1 or 2, wherein an object-side surface of the first lens has a convex shape toward the object side.

4. The electronic device of any one of claims 1 to 3, wherein the third lens has a meniscus shape that is curved toward the image side.

5. The electronic device of any one of claims 1 to 4, wherein the following [Equation 6] is satisfied:

[Equation 6]

$$S2/TTL \leq 0.9$$

wherein "SD" is a distance from an object-side surface of the first lens to an image-side surface (S9) of the fourth lens, and "TTL" is a distance from the object-side surface of the first lens to the imaging plane.

6. The electronic device of any one of claims 1 to 5, wherein the third lens satisfies the following [Equation 7]:

[Equation 7]

$$N3 \leq 1.6$$

wherein "N3" is a refractive index of the third lens at a wavelength of 587.6 nm.

7. The electronic device of any one of claims 1 to 6, wherein the first lens satisfies the following [Equation 8]:

$$[\text{Equation } 8]$$

$$N1 \leq 1.6$$

wherein "N1" is a refractive index of the first lens at a wavelength of 587.6 nm.

8. The electronic device of any one of claims 1 to 7, wherein the fourth lens satisfies the following [Equation 9]:

$$[\text{Equation } 9]$$

$$N4 < 1.6$$

wherein "N4" is a refractive index of the fourth lens at a wavelength of 587.6 nm.

9. The electronic device of any one of claims 1 to 8, wherein the second lens has a negative refractive power and satisfies the following [Equation 10]:

$$[\text{Equation } 10]$$

$$CT2 \geq 0.15 \text{ mm}$$

wherein "CT2" is a center thickness of the second lens.

10. The electronic device of any one of claims 1 to 9, wherein the third lens has a positive refractive power, and an image-side surface (S8) of the third lens has a convex shape toward the image side.

11. The electronic device of any one of claims 1 to 10, wherein at least one of an object-side surface or an image-side surface (S10) of the fourth lens is formed as an aspherical surface.

12. The electronic device of claim 11, wherein at least one aspherical surface among an object-side surface or an image-side surface of the fourth lens includes at least one inflection point.

13. The electronic device of any one of claims 1 to 12, wherein the following [Equation 11] is satisfied:

$$[\text{Equation } 11]$$

$$IH/N2 \geq 1.7$$

wherein "IH" is half of a diagonal length of the image sensor, and "N2" is a refractive index of the second lens at a wavelength of 587.6 nm.

14. The electronic device of any one of claims 1 to 13, wherein the lens assembly further comprises a stop (sto) disposed between an object and the first lens.

15. The electronic device of any one of claims 1 to 14, wherein the lens assembly has a field of view equal to or less than 90 degrees.

FIG. 1

**200**

**280**

## CAMERA MODULE

**220**

FLASH

**210**

LENS ASSEMBLY

**230**

IMAGE SENSOR

**240**

IMAGE STABILIZER

**250**

MEMORY

**260**

IMAGE SIGNAL PROCESSOR

# FIG. 2

FIG. 3

FIG. 4

FIG. 5

LONGITUDINAL SPHERICAL ABER.

FIG. 6A

ASTIGMATIC FIELD CURVES

IMG HT

DISTORTION

IMG HT

FOCUS (FOCUS:mm)

DISTORTION (DISTORTION:%)

FIG. 6B

FIG. 6C

FIG. 7

LONGITUDINAL SPHERICAL ABER.

FIG. 8A

ASTIGMATIC FIELD CURVES
IMG HT

S    T
2.93

2.20

1.47

0.73

-0.2   -0.1   0.0   0.1   0.2

FOCUS (FOCUS:mm)

DISTORTION
IMG HT

2.93

2.20

1.47

0.73

-5.0   -2.5   0.0   2.5   5.0

DISTORTION (DISTORTION:%)

# FIG. 8B      FIG. 8C

FIG. 9

LONGITUDINAL SPHERICAL ABER.

| | |
|---|---|
| —————— | 656.3000 NM |
| – – – – | 587.6000 NM |
| —————— | 546.1000 NM |
| ·············· | 486.1000 NM |
| —————— | 435.8000 NM |

FOCUS (FOCUS:mm)

# FIG. 10A

ASTIGMATIC FIELD CURVES

IMG HT

S T

2.93

2.20

1.47

0.73

-0.08   -0.04   0.0   0.04   0.08

FOCUS (FOCUS:mm)

## FIG. 10B

DISTORTION

IMG HT

2.93

2.20

1.47

0.73

-5.0   -2.5   0.0   2.5   5.0

DISTORTION (DISTORTION:%)

## FIG. 10C

FIG. 11

LONGITUDINAL SPHERICAL ABER.

FIG. 12A

ASTIGMATIC FIELD CURVES

S
T
IMG HT
2.93
2.20
1.47
0.73

-0.20  -0.10  0.0  0.10  0.20

FOCUS (FOCUS:mm)

## FIG. 12B

DISTORTION

IMG HT
2.93
2.20
1.47
0.73

-5.0  -2.5  0.0  2.5  5.0

DISTORTION (DISTORTION:%)

## FIG. 12C

FIG. 13

LONGITUDINAL SPHERICAL ABER.

| | 656.3000 NM |
| | 587.6000 NM |
| | 546.1000 NM |
| | 486.1000 NM |
| | 435.8000 NM |

FOCUS (FOCUS:mm)

# FIG. 14A

ASTIGMATIC FIELD CURVES

S    IMG HT
   T

2.93

2.20

1.47

0.73

-0.20  -0.10   0.0   0.10   0.20

FOCUS (FOCUS:mm)

FIG. 14B

DISTORTION

IMG HT

2.93

2.20

1.47

0.73

-5.0   -2.5   0.0   2.5   5.0

DISTORTION (DISTORTION:%)

FIG. 14C

## INTERNATIONAL SEARCH REPORT

| International application No. |
| --- |
| **PCT/KR2024/003871** |

### A. CLASSIFICATION OF SUBJECT MATTER

**G02B 13/00**(2006.01)i; **G02B 9/34**(2006.01)i; **H04N 23/55**(2023.01)i; **G02B 3/00**(2006.01)i

According to International Patent Classification (IPC) or to both national classification and IPC

### B. FIELDS SEARCHED

Minimum documentation searched (classification system followed by classification symbols)

G02B 13/00(2006.01); G02B 13/06(2006.01); G02B 13/18(2006.01); G02B 27/00(2006.01); G02B 9/62(2006.01); G02B 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제4 렌즈(fourth lens), 이미지 센서(image sensor), 대각선 길이의 절반(half of diagonal length), 굴절률(refractive index), 입사동 직경(entrance pupil diameter), 초점(focal length), TTL

### C. DOCUMENTS CONSIDERED TO BE RELEVANT

| Category* | Citation of document, with indication, where appropriate, of the relevant passages | Relevant to claim No. |
| --- | --- | --- |
| X | US 2019-0033556 A1 (LARGAN PRECISION CO., LTD.) 31 January 2019 (2019-01-31)<br>See paragraphs [0002] and [0208]-[0219] and figures 17-18. | 1-3,5,7-9,11-15 |
| X | US 2022-0206271 A1 (AAC OPTICS (CHANGZHOU) CO., LTD.) 30 June 2022 (2022-06-30)<br>See paragraphs [0002], [0037]-[0140] and [0156] and figure 1. | 1,4,6,10 |
| X | CN 115774321 A (LARGAN PRECISION CO., LTD.) 10 March 2023 (2023-03-10)<br>See paragraphs [0002] and [0161]-[0197] and figure 1. | 1 |
| A | CN 212009124 U (ZHEJIANG SUNNY OPTICS CO., LTD.) 24 November 2020 (2020-11-24)<br>See paragraphs [0002]-[0003], [0107]-[0118] and [0132] and figure 9. | 1-15 |
| A | CN 215416070 U (JIANGXI JINGCHAO OPTICS CO., LTD.) 04 January 2022 (2022-01-04)<br>See paragraphs [0002]-[0003] and [0087]-[0098] and figure 1. | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 July 2024** | **14 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003871**

| Patent document cited in search report | | | Publication date (day/month/year) | Patent family member(s) | | | Publication date (day/month/year) |
|---|---|---|---|---|---|---|---|
| US | 2019-0033556 | A1 | 31 January 2019 | CN | 109307922 | A | 05 February 2019 |
| | | | | CN | 109307922 | B | 23 October 2020 |
| | | | | CN | 112051658 | A | 08 December 2020 |
| | | | | CN | 112051658 | B | 17 December 2021 |
| | | | | CN | 112147760 | A | 29 December 2020 |
| | | | | CN | 112147760 | B | 26 November 2021 |
| | | | | CN | 113625427 | A | 09 November 2021 |
| | | | | CN | 113625427 | B | 31 January 2023 |
| | | | | TW | 201910848 | A | 16 March 2019 |
| | | | | TW | I613483 | B | 01 February 2018 |
| | | | | US | 10520705 | B2 | 31 December 2019 |
| US | 2022-0206271 | A1 | 30 June 2022 | CN | 112748537 | A | 04 May 2021 |
| CN | 115774321 | A | 10 March 2023 | EP | 4148478 | A1 | 15 March 2023 |
| | | | | US | 2023-0070553 | A1 | 09 March 2023 |
| CN | 212009124 | U | 24 November 2020 | None | | | |
| CN | 215416070 | U | 04 January 2022 | None | | | |

Form PCT/ISA/210 (patent family annex) (July 2022)